Europäisches Patentamt

European Patent Office

Office européen des brevets

(11) Publication number: **0 235 773**
**A1**

## EUROPEAN PATENT APPLICATION

(21) Application number: **87102873.4**

(22) Date of filing: **28.02.87**

(51) Int. Cl.⁴: **A01N 25/02** , A01N 25/14 ,
A01N 37/36

(30) Priority: **03.03.86 US 835603**

(43) Date of publication of application:
**09.09.87 Bulletin 87/37**

(84) Designated Contracting States:
**AT BE CH DE ES FR GB GR IT LI LU NL SE**

(71) Applicant: **CELAMERCK GmbH & Co. KG**
**Binger Strasse 173**
**D-6507 Ingelheim am Rhein(DE)**
Applicant: **THE ANDERSONS**
**P.O. Box 119**
**Maumee Ohio 43537(US)**

(72) Inventor: **Kotz, Michael Edward**
**5532 Fleet Street**
**Toledo, Ohio 43615(US)**

(74) Representative: **Laudien, Dieter, Dr. et al**
**Boehringer Ingelheim Zentrale GmbH ZA**
**Patente Postfach 200**
**D-6507 Ingelheim am Rhein(DE)**

(54) **Improved pesticide formulations.**

(57) The post-emergent control of a broad spectrum of pests is accomplished by the post-emergent application of a pesticidally effective amount of a formulation comprised of at least one post-emergent, foliar absorbed, substantially water insoluble active ingredient dispersed in at least one substantially water miscible polar/nonpolar solvent which has a vapor pressure of not more than 760 mm of Hg at 20°C capable of dissolving a plant cuticle, including the cuticular wax, and, optionally a surface active agent which substantially prevents the active ingredient from precipitating upon dilution of the formulation with water. The formulation is initially applied to the surface of the foliage and is subsequently incorporated therein by the dissolution of the waxy layer of the foliage by the polar/nonpolar solvent.

EP 0 235 773 A1

# IMPROVED PESTICIDE FORMULATIONS

The invention relates to post-emergent pesticide formulations wherein the formulations comprise at least one active pesticide ingredient and at least one solvent material having polar/nonpolar properties and relatively low volatility.

Pest control for agricultural crops and ornamental turf grasses has long been a matter of great importance. Many different classes of formulations as well as hundreds of specific compounds have been developed for the purposes of weed and pest control. In particular, there are many types of compounds used in the post-emergent application of pesticides to pests. By the term "post-emergent" as used herein, it is meant the application of a pesticide to a locus where control is desired, after a plant has emerged from the soil as a consequence of growth. For example, post-emergent herbicides act on the weeds after the weeds have emerged from the soil, and, post-emergent insecticides are applied to the crop or turf after the crop or turf has emerged from the soil and the pests have attacked the crop or turf.

In order to deliver an effective amount of the desired active ingredient to a target plant, various types of pesticide formulations have been developed. However, formulations suitable for use in pesticide applications require an optimal balance of several properties. Such formulations must be able to withstand the variable environmental moisture conditions such as dews or rain without washing off the target plant. Further, it is desirable that the formulations be useful for delivering different types of pesticides, such as herbicides, fungicides and insecticides.

The trade has classified types of formulations useful for delivering different types of pesticides. For example, wettable powder formulations (WP) generally comprise a liquid active ingredient which is sprayed onto an inert carrier (generally clay) or a solid active ingredient together with a carrier, which is then milled along with a wetting agent and dispersing agent. The wettable powder formulations are wetted with water and delivered to the target crop. While the water acts as the delivery vehicle for the active ingredient to the target crop, the water rapidly evaporates and the particulate material can be blown or knocked off the plant before the active ingredient has time to penetrate into the plant.

Another type of pesticide formulation is a water dispersible granular product which is made using a process similar to the process for making the wettable powders. However, the particle size of the individual particles in the water dispersible granule is normally smaller than the wettable powders. Also, additional wetting and suspending agents are added to the water dispersible granulars. Water is added to the water dispersible granular material and the material is agglomerated, usually with a pan or disc granulator and then dried. The finished water dispersible granular formulation is added to water and delivered to the target crop.

Still another type of pesticide formulation is a granular product which generally contains the active ingredient either impregnated in or surface applied to a dry granular carrier and then delivered to the target crop.

Yet another type of pesticide formulation is an emulsifiable concentrate (EC). This type of formulation in the concentrated form is a solution containing at least one water immiscible ingredient, such as the active ingredient alone or in a nonpolar solvent and an emulsifier. The preferred formulation of an emulsifiable concentrate comprises a pesticide which is non polar, in the liquid state, of a viscosity which is easily pourable and a physically compatible emulsifier, i.e., one which is miscible or soluble in the liquid pesticide. If two or more pesticides are used, the second pesticide must likewise be miscible (if a liquid) or soluble (if a solid) in the emulsifier and/or first pesticide. However, such formulations are not the norm. Normally, a nonpolar solvent is required to solubilize the active ingredient and/or provide a suitable immiscible liquid to emulsify. Solvent selection may be limited by availability of a solvent compatible emulsifier. Also, additives are included to adjust viscosity, volatility, flash points, freeze points and to act as coupling or compatibility agents for the various ingredients. The function of these additives has been generally limited to improving the handling properties and commercial acceptability of the formulation in the concentrated (undiluted) form. When the concentrate is added to water, an emulsion is formed. The emulsion is then delivered to the target crop. While agitation and the emulsifier in the EC causes the dispersion of one immiscible ingredient in the other (the water carrier), the dispersed droplets are relatively large and do not adequately cover the target crop with the active ingredient. Therefore, a relatively large amount of the active ingredient must be delivered to the target crop in order to achieve the desired efficacy.

Other generally recognized formulations include soluble salts which are solubilized in water, diluted to desired strength and delivered to the target crop, and fluid flowables which contain the active ingredient milled to a fine size, generally smaller than the wettable powders, and supended in either an oil or water diluent. The fluid flowable formulations are designed to be suspensions of invididual solid particles of

pesticide or pesticide on an absorbant mineral/carrier. The typical particle size is 3 to 4 microns. The fluid flowable formulation also includes suspending agents, dispersing agents, small amounts of glycol or other antifreeze, stabilizers etc. Generally, only water-based formulations contain antifreezes such as glycol. The normal use rate of such antifreeze is 5 to 10% glycol by weight. For example, Cassell et al. U.S. Patent No. 4,415,355 teaches the use of dimethylformide and butyrolactone as freezing point depressants with dinitroaniline herbicides. Cassell et al. states that the incorporation of these materials has no "...detrimental effect on the activity of the dinitroaniline, the crop or the environment". Included in the dinitroaniline herbicides are benefin, trifluralin and pendimethalin. One use of these herbicides is to control emerging crabgrass in areas of turf grass. These herbicides require placement at or below the soil surface so that the active ingredient can be picked up by the growing tips or roots of emerging annual grassy weeds. The use of butyrolactone and/or DMF, increases the tendency of these active ingredients to stick to the established turf grass. This decreases the amount of active deposited on the soil surface and efficacy of the active ingredient. EC formulations of benefin, trifluralin and pendimethalin have been evaluated for use on turf and have been found inadequate compared to other formulations.

Monroe, U.S. Patent No. 4,380,537 teach the use of butyrolactone as a stabilizer for pesticides such as organophosphate insecticides. Again, while this approach may be acceptable for soil incorporated granules, application of lightweight carriers such as vermiculite with butyrolactone and an insecticide for soil dwelling insects such as white grubs in turf reduces efficacy by transferring active to the intercepting plant foliage rather than the soil surface. While the polar/nonpolar solvents have been used in small amounts in prior art formulations, the use of water soluble solvents are usually avoided, since the water soluble solvents partition into the aqueous phase when the formulation is diluted. This partitioning into the aqueous phase can result in crystallization of the active ingredient, which can cause problems such as settling or separation in the spray tank and plugging of application spray nozzles. [Encyclopedia of Emulsion Technology, Vol. 2, edited by Paul Becker, Marcel Dekker Inc. 1985] A good formulation will be obtained only if the water soluble solven remains primarily in the disperse phase. This will occur if the solvent is also very soluble in the water insoluble solvent and the formulation is not diluted by too great a quantity of water. In the prior art formulations, the small quantity of polar/nonpolar solvent is combined with a solvent which is essentially nonpolar in properties.

These above-described known formulations are used to deliver both pre-emergent and post-emergent pesticides. The effectiveness of post-emergent pesticide active ingredients is not only dependent upon which type of formulation is used and that formulation's physical and chemical characteristics, but also upon various external or environmental factors. These factors include the growing conditions such as whether it is a northern or southern locus, climate, type of soil, and time of year. The growing conditions often influence whether the pesticide will remain in contact with the plant for a long enough time to be effective. In addition, the efficacy of the post-emergent pesticide especially systemic materials is influenced by the ability of the active ingredient of the pesticide to enter the plant. The characteristics of the plant surface such as cuticle development, thickness of the cuticle, leaf topography (the shape of the epidermal cells, the geometry of the cell walls, and depressions between the cell walls) and whether the plant surface is covered with hairs or trichomes are factors which influence the pesticide's efficacy because they constitute a barrier to the pesticide.

The type of formulation, such as emulsifiable concentrate, wettable powder, water dispersable granular or fluid flowable products, chosen for the delivery of any particular pesticide influences the performance of the pesticide once on the plant surface. The principles of pesticide dispersal patterns have been enunciated by Hess et al. ( Weed Science, Vol. 29, Issue 2, 1981) and many others familar with the problems of effective pesticide applications, indicate that the spray volume, droplet size and surface tension of the pesticide formulation will influence the pesticide performance. The variations in efficacy after treatment of a locus with a formulations are caused, in part, by differences in foliar absorption of the individual formulations. One variation is due to an interaction between the formulation components and the plant cuticle constituents. For example, 2,4-D formulated as a lipophilic ester will penetrate the plant surfaces better than will the hydrophilic salt formulations. Also, different formulations show different penetration properties as the result of different distributions on the plant surface. However, unsolved problems in this area include the continued use of widely differing pesticide formulations which tend to hinder, rather than improve, the efficacy of active ingredient. Thus, there is a continued need for novel and improved formulation which more effectively deliver active ingredients to the target crop and which more completely cover the epidermis of the plant thus exposing more active ingredient to the plant cells.

There is a need for a novel and improved pesticide formulation since the introduction of completely new active chemical ingredients requires long-term testing of the environmental effects of the new chemicals. Thus, the use of specific combinations of known and well-tested substances would reduce these problems if the various ingredients of the formulations complement each other. In particular, while it is known that combinations of active pesticide ingredients along with surfactants or adjuvants complement and produce an effective pesticide, the results of combining different chemicals are not predictable. In some cases it may be desirable to combine two or more pesticides into a single formulation for maximum convenience however this may be impractical with current state-of-the-art pesticide formulations. In theory, an active ingredient combined with a suitable solvent might yield mixtures wherein the properties of the mixtures could be predictable from the properties of the active pesticide ingredient. In practice, however, any formulation of the active ingredient and solvent, entails the risks of damage to the crop, or at best, the mixture is merely additive. Further, the active ingredient is not always delivered to the plant under optimal conditions for effectiveness.

Specifically a continued need exists for an improved pesticide formulation which allows a more effective amount of the active ingredient to be delivered to the target plant and to remain in contact with the target plant for a sufficient period of time such that the active ingredient will have its desired effect on the target.

There is a need in the industry for an improved pesticide formulation which has greater precision, accuracy and uniformity of delivery. In particular, there is a need for increasing the efficacy of granular and spray pesticide applications by developing improved carrier and active ingredient formulation systems.

There is a further need to achieve greater uniformity in the formation of the spray droplets, transporting the droplet to the target, and deposition of the droplets on the plant surface. Still further, there is a continuing need to improve the interaction between the spray droplet and the plant surface.

There is a further need to be able to deliver multiple pesticides in a common formulation.

Accordingly, it is a primary object of the invention to provide for an improved pesticide formulation for use the post-emergent control of pests harmful to ornamental turf grasses and agricultural crops.

Another important object is to provide a novel and improved pesticide formulation comprising effective amounts of a previously known pesticide active ingredient and a carrier solvent for improved pest control.

Further objects of the invention will become apparent as the specification proceeds.

## SUMMARY OF THE INVENTION

The present invention provides an improved post-emergent pesticide formulation composed of at least one active ingredient and at least one polar-nonpolar solvent of a low volatility. The pesticide formulation of the present invention is termed a water dispersible solution (WDS) formulation.

A prime advantage of the present invention is that the pesticide/polar-nonpolar solvent sprayable formulation is more suitable for use in spray applications than the formulations disclosed or suggested in the prior art. The pesticide/polar-nonpolar solvent formulation of the present invention whether granular or sprayable has a greater efficacy at lower application rates of active ingredient and achieves such efficacy in a shorter period of time than the prior art formulations. The formulation of the present invention can be used with many well-known pesticide active ingredients with an unexpected increase in the efficacy of the active ingredient.

Another advantage of the present invention is that the pesticide/polar-nonpolar solvent formulation exhibits leaf barrier penetration properties which makes the formulation of the present invention well-suited both for contact and systemic foliar applied post-emergent pesticide applications. The formulation of the present invention penetrates the protective waxy cuticle layer of the plant such that an effective amount of the active ingredient is delivered to the underlying layer of plant cells and acts upon these cells.

The present invention provides a formulation composed of at least one active pesticide ingredient and at least one polar/nonpolar solvent of low volatility. The use of the two different materials provides a formulation having an advantageous balance of physical and chemical properties. The formulation of the present invention is well-suited for use in a variety of pesticide application needs including use for ornamental turf grasses and agricultural crops.

One formulation of the present invention features a pesticide formulation comprises of the active ingredient chlorflurenol and the polar/nonpolar solvent butyrolactone. The formulation of the present invention unexpectively yields a pesticide formulation with high weed control at greatly reduced application rates. While presently used chlorflurenol based pesticides approach application rates of 3 pounds of active chlorflurenol ingredient per acre, the formulation of the present invention, when using chlorflurenol methyl ester as the active and butyrolactone as the solvent, can be applied at rates as low as 0.25 pounds of active

4

ingredient per acre while obtaining equal or superior pest control as compared to both the presently available chlorflurenol and phenoxy herbicides. In addition, according to the present invention even lower chlorflurenol application rates can be used and the same good results are achieved when chlorflurenol in a polar/nonpolar solvent is used in combination with another active ingredient, such as dicamba. The formulation of the present invention yields a more stable product which can be applied over a wider range of conditions. Further, the formulation of the present invention has been found to control a wide spectrum of broadleaf weeds while at the same time being able to be applied to certain sensitive ornamental grasses which heretofor exhibited phytotoxic results when treated with other herbicides or other formulations.

The pesticide formulation of the present invention provides for an effective delivery of the active ingredient to the locus where control is desired. The active ingredient in the pesticide formulation of the present invention is delivered to the target locus either as an amorphous fluid deposit or as a fine crystalline deposit. The fine crystal deposits of active ingredient in the formulation of the present invention are more soluble than the large crystals found in the prior art formulations. The tendency for smaller crystals to enter into the solution is greater for smaller crystals than for larger crystals since ions in the interior portion of a crystal are bound with greater forces than those of the faces and edges of a crystal and a greater fraction of the ions occupy surface positions in smaller, rather than larger, crystals. Further, a deposit of the smaller crystals on a leaf surface allows for more contact between the surface area of the small crystal and plant surface, per unit of weight. There is also better and more uniform distribution of a given weight of active ingredient along a surface with smaller crystals.

In addition, the active pesticide ingredient in the formulation of the present invention, even though in the form of solid crystals in the unformulated state, is frequently deposited on the plant surface as an amorphous liquid, or noncrystalline state. This is a surprising advantage of the present invention since crystalline solids have less molecular energy or motion than liquids and crystals are nearly motionless whereas liquids possess higher kinetic energy and have more freedom of molecular motion facilitating movement of the pesticide molecule into the plant. The active ingredient in the formulation of the present invention when in the fluid state flows and covers the leaf surface more uniformly. Further, the formulation of the present invention reduces surface tension and allows the active pesticide ingredient to spread out more evenly as a liquid along the surface of the leaf and further increases the amount of active ingredient adhering to the plant surface.

Also, the formulation of the present invention acts to modify the epicuticular wax on the plant surface by solubilizing or depositing the active ingredient in the cuticle allowing for better movement of the active pesticide ingredient into the plant by penetrating the biggest barrier, the waxy outer layer.

Also, the formulation of the present invention is particularly well-suited not only for the delivery of contact pesticides, but also for systemic pesticides. The formulation of the present invention first solubilizes or softens the waxy cuticle, then as the water in the solvent/water carrier evaporates, allows the waxy cuticle to be redeposited as a matrix of waxy cuticle and pesticide formulation on the leaf surface. The redeposited matrix allows the active ingredient to penetrate into the cells. Maintenance of the protective waxy cuticle is an especially important factor in the use of pesticides as the cuticle prevents dislodging or washing off of any pesticide which has been incorporated into the cuticle. In addition, the cells of a plant must function normally if a systemic active ingredient is to work effectively since functioning plant cells are needed to translocate the active ingredient from the site of application to the site of activity in the plant. Excessive loss of the cuticle or dessication of cells due to a loss of the waxy cuticle results in a temporary loss of the ability of a plant to regulate temperature and water.

Another factor important in the absorption of the active pesticide ingredient in post-emergent spray applications is the rate of droplets drying. According to the formulation of the present invention, solubilizing and redepositing of the waxy cuticle slows the rate of droplet evaporation since the waxy cuticle -pesticide formulation combination has a slow rate of evaporation. The slower drying of the droplet increases the time for absorption of the active ingredient from the liquid state into the plant cells.

Further, according to the pesticide formulation of the present invention, there is decreased volatilization during spray applications resulting in a reduction in the loss of the active ingredient which tends to volatize on the leaf surface in prior art pesticide formulations. There is also a reduction in the non-targeted drift of the pesticide formulation of the present invention since the formulation adheres well to the plant surface.

Further, the formulation of the present invention optimizes the balance between cuticular compatibility determined by the nonpolar properties of the formulation and the inherent toxicity of a polar (hence more internally transportable pesticide) molecule by providing both lipophilic and hydrophilic pathways for entry of the active pesticide ingredient into the leaf cells.

A more complete understanding of the present invention can be obtained from a reading of the following description of the preferred embodiment.

## DESCRIPTION OF THE FIGURES

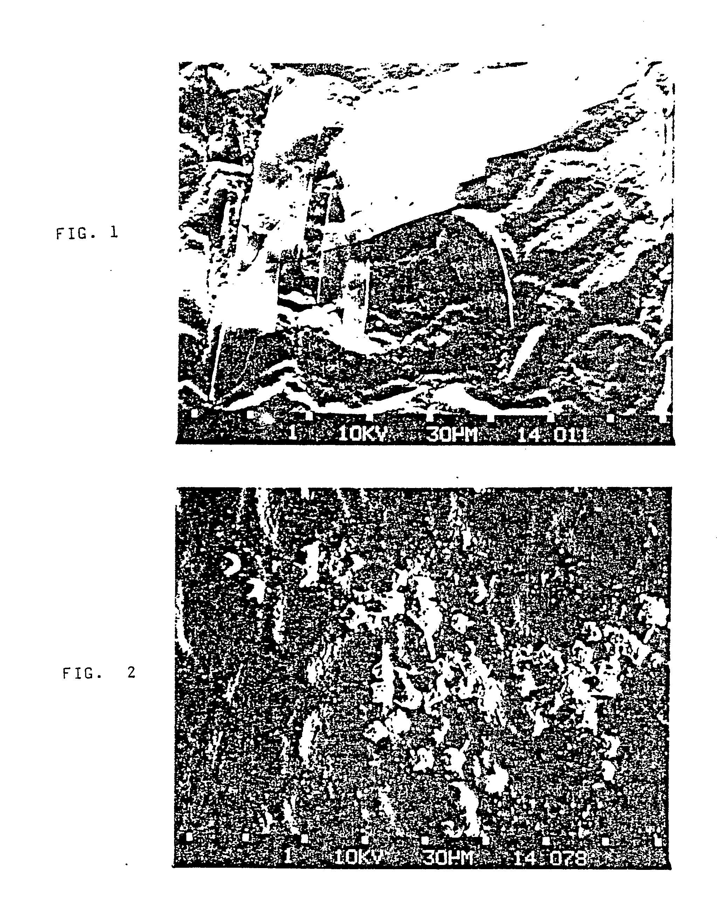

Fig. 1 is a scanning electron microphotograph of 500 X magnification showing an application of a prior art formulation of chlorflurenol methyl ester as an emulsifiable concentrate (Maintain ™ CF125) to a philodendron leaf after dilution with water; rate 1 lb. active ingredient/acre (ai/A) in 40 gallons/A spray volume; wherein the application shows crystals of chlorflurenol averaging in size of about 25 x 100 microns.

Fig. 2 is a scanning electron microphotograph of 500 X magnification showing an application of a formulation of the present invention Formulation C-127 comprising chlorflurenol methyl ester active ingredient and dimethyl sulfoxide (DSMO) as the polar/nonpolar solvent to a philodendron leaf; wherein approximately 25% of the application of the formulation resulted in the deposition of crystals averaging in size from 7 to 10 microns square surrounded by smaller satellite crystals of 1 to 2 microns in size.

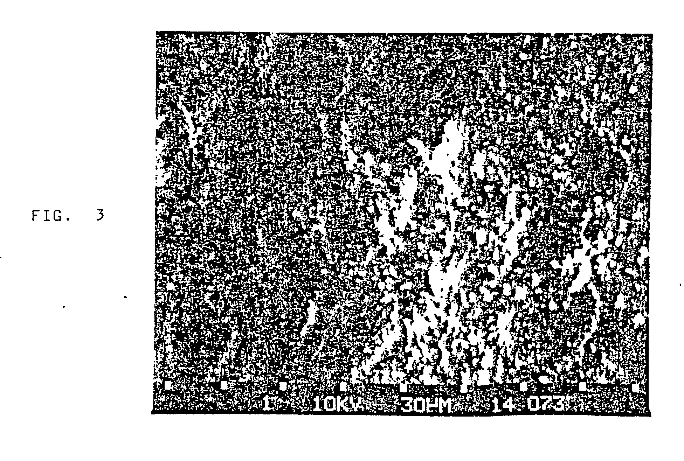

Fig. 3 is a scanning electron microphotograph of 500 X magnification of the same philodendron leaf as shown in Fig. 3 showing another deposit of the application of the formulation of the present invention Formulation C-127 comprising chlorfluenol methyl ester active ingredient and DSMO as the polar/nonpolar solvent; wherein approximately 75% of the application of the formulation resulted in the deposition of amorphous grainy deposits containing solubilized and partially solubilized active ingredient in a matrix of redeposited plant cuticle wax and solvent.

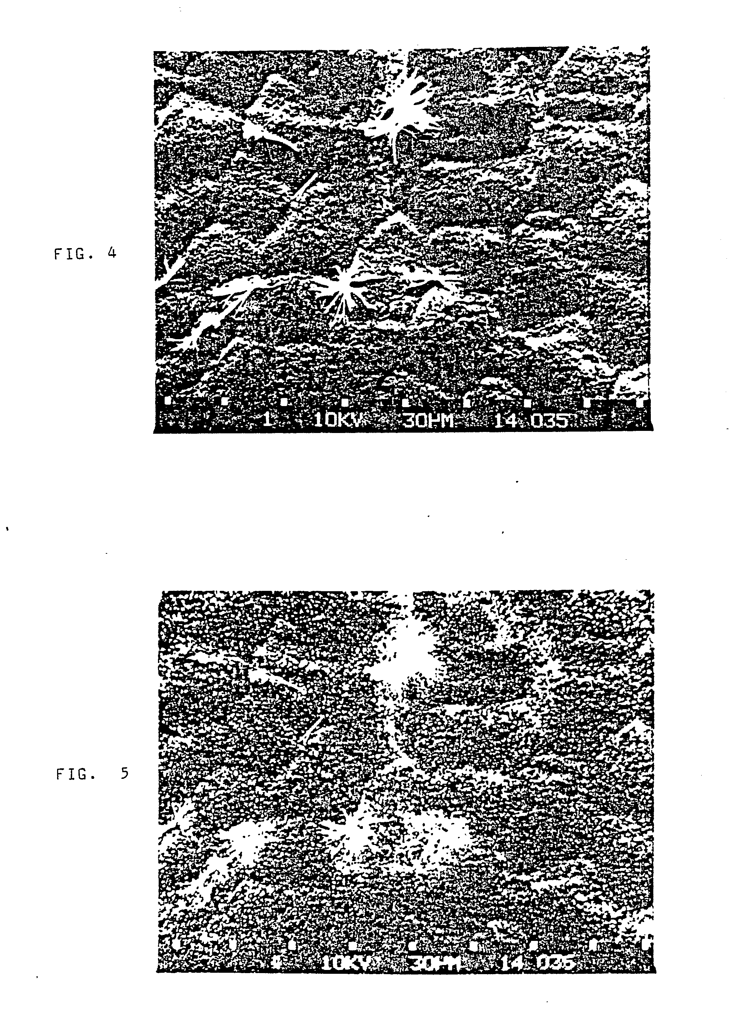

Fig. 4 is a scanning electron microphotograph of 500 X magnification showing an application of a prior art commercial formulation of trichlorpyr as a trichlorpyr triethylamine salt solution formulation - (Garlon™ 3A) to a philodendron leaf at the rate of 1 lb. ai/A in 40 gallons/A spray volume; wherein the application shows feathery, snowflake-like crystals with average diameter of approximately 30 microns.

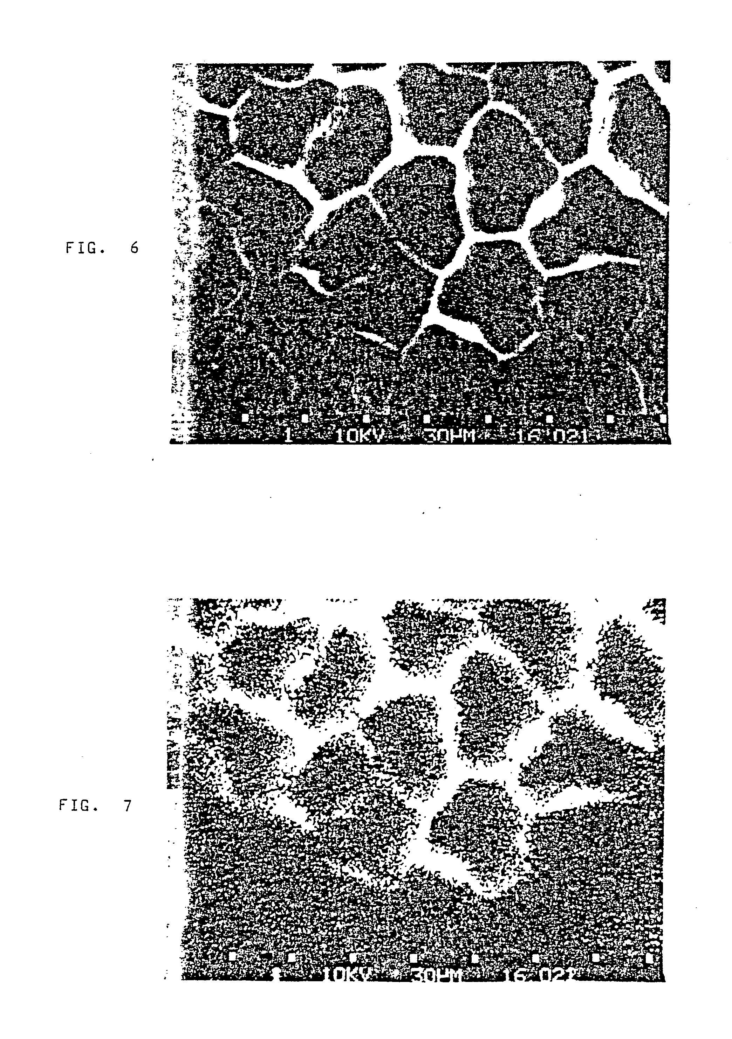

Fig. 5 is a composite of the scanning electron micrograph of Fig. 4 with a negative of a chlorine X-ray element map of the same application shown in Fig. 4, showing that the concentration of chlorine present corresponds to the crystal deposits of the active ingredient shown in Fig. 6, and further showing the background "dots" of naturally occurring chlorine in the philodendron leaf.

Fig. 6 is a scanning electron microphotograph of 500 X magnification showing an application of a formulation of the present invention comprising trichlorpyr triethylamine (Garlon ™ 3A) as the active ingredient and propylene glycol as the polar/nonpolar solvent, diluted 1 to 1 by volume, to a philodendron leaf at the rate of 1 lb. ai/A in 40 gallons/A $H_2O$ spray volume; wherein the application shows that the formulation was redeposited as an amorphous matrix of solvent, plant cuticular wax and active ingredient on the low spots of the plant surface.

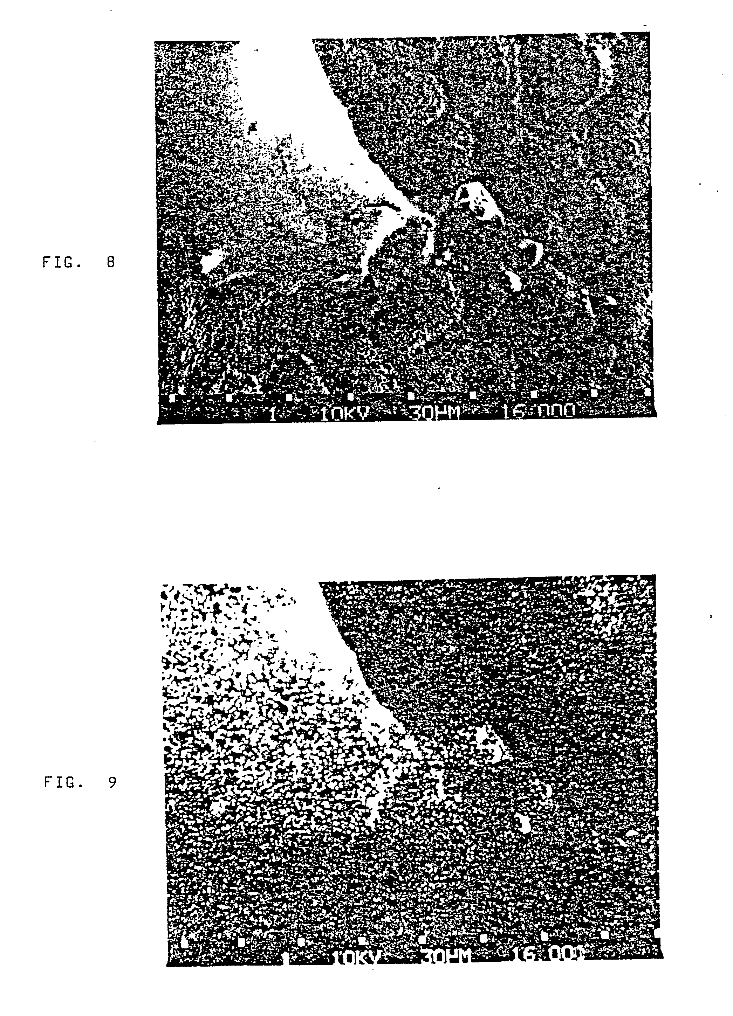

Fig. 7 is a composite of the scanning electron microphotograph of Fig. 6 with a negative of a chlorine X-ray element map of the same application shown in Fig. 6, showing that the concentration of chlorine present corresponds to the deposit of the active ingredient shown in Fig. 6, and further showing the background "dots" of naturally occurring chlorine in the philodendron leaf.

Fig. 8 is a scanning electron microphotograph of 500 X magnification showing an application of a formulation of the present invention comprising trichlorphyr triethylamine (Garlon™ 3A) as the active ingredient and glycerine as the polar/nonpolar solvent, diluted 1 to 1 by volume, to a philodendron leaf at the rate of 1 lb. ai/A in 40 gallons/A $H_2O$ spray volume; wherein the application shows that the formulation has redeposited uniformly as an amorphous matrix of solvent, plant cuticular wax and active on the plant surface.

Fig. 9 is a composite of the scanning electron microphotograph of Fig. 8 with a negative of a chlorine X-ray element map of the same application shown in Fig. 8, showing that the concentration of the chlorine present corresponds to the deposit of the active ingredient shown in Fig. 6, and further showing the background "dots" of naturally occurring chlorine in the philodendron leaf.

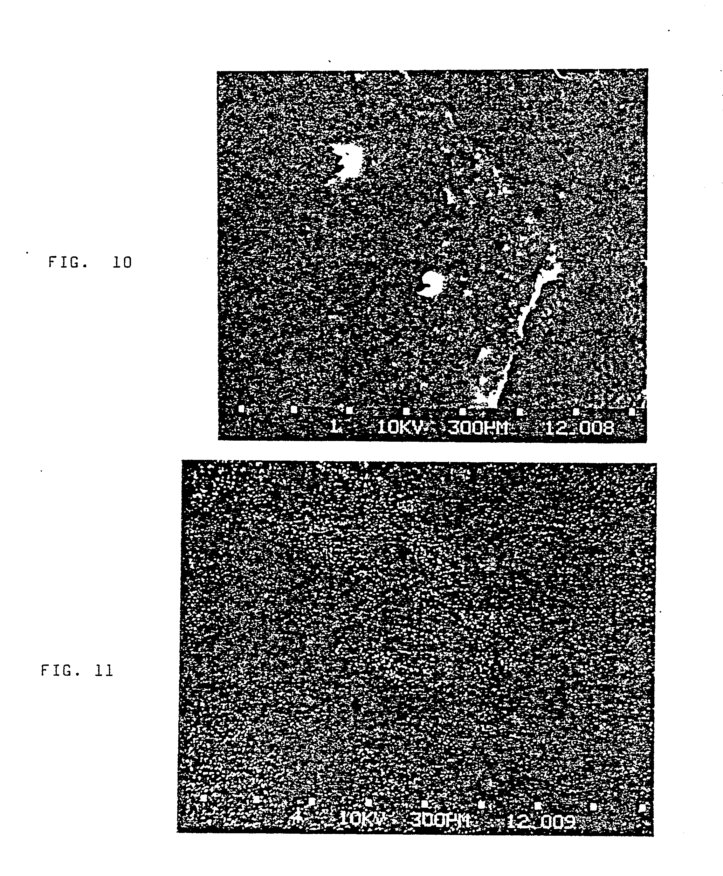

Fig. 10 is a scanning electron microphotograph of 500 X magnification showing an application of a formulation of the present invention comprising a corncob granule containing 2,4-D dimethylamine salt solution plus bromoxynil octonoate as the active ingredients and butyrolactone as the polar/nonpolar solvent for the bromoxynil octonoate to a philodendron leaf; wherein the application shows the formulation has redeposited on the leaf surface as an amorphous matrix of solvent, plant cuticle wax and active ingredients.

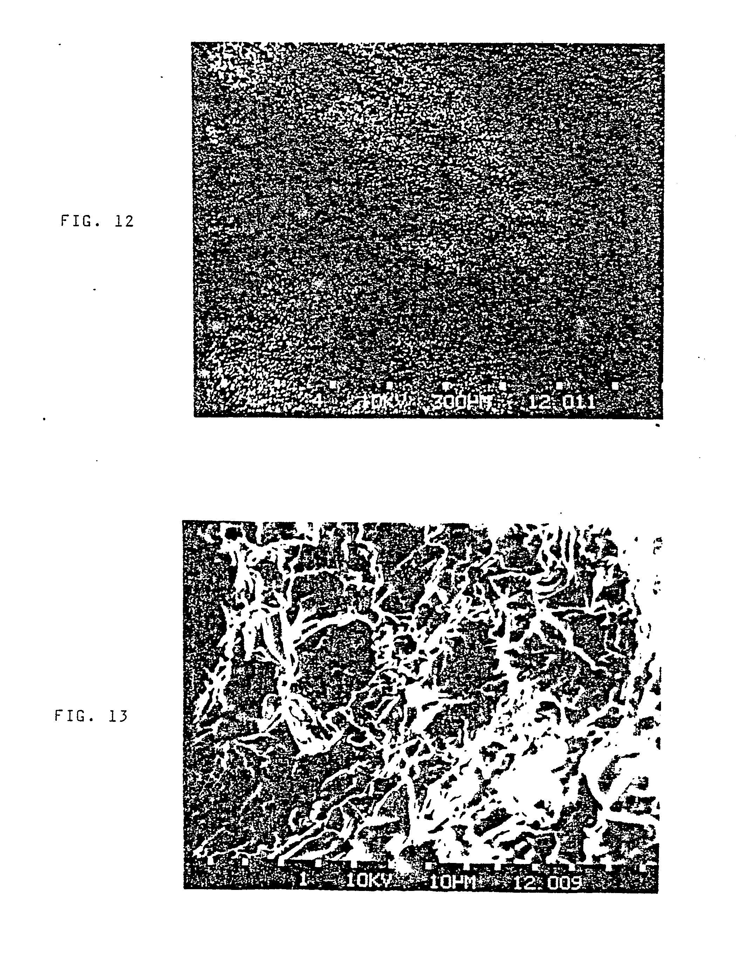

Fig. 11 is a composite of the scanning electron microphotograph of Fig. 10 with a negative of a bromine X-ray element map of the same application of Fig. 10, showing that the concentration of the bromine present corresponds to the deposit of the active ingredients shown in Fig. 10, and further showing the background "dots" of naturally occurring bromine in the philodendron leaf.

Fig. 12 is a composite of the scanning electron microphotograph of Fig. 10 with a negative of a chlorine X-ray element map of the same application of Fig. 10, showing that the concentration of chlorine present corresponds to the deposit of the active ingredient 2, 4-D-dimethylamine shown in Fig. 10, and further showing the background "dots" of naturally occurring chlorine in the philodendron leaf.

Fig. 13 is a scanning electron microphotograph of 1000 X magnification showing a surface of a granule formulation of the present invention containing 2, 4-D dimethylamine and bromoxynil octonoate, which type of granule was applied to the leaf shown in Fig. 10.

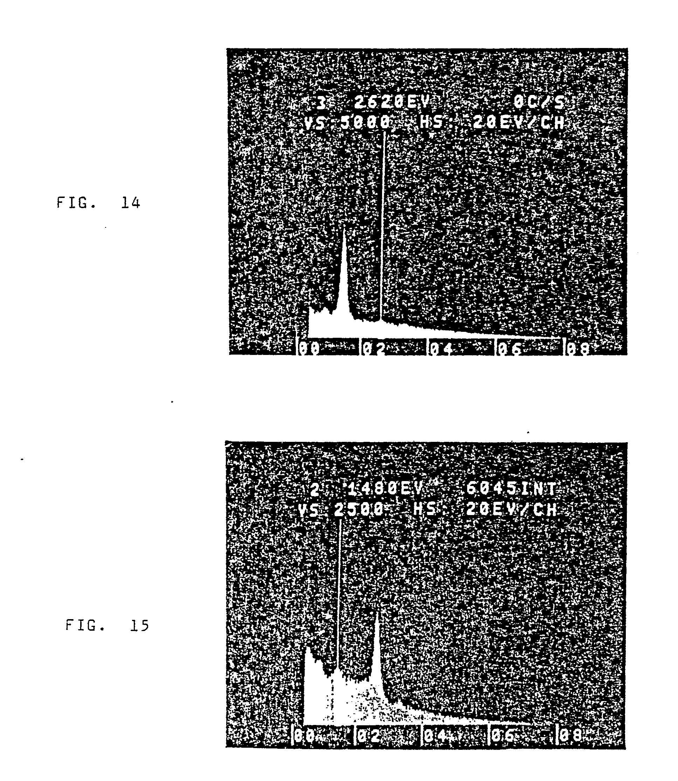

Fig. 14 is a photographic record of a spectrum analysis taken of Fig. 13 showing a peak of bromine, demonstrating the presence of bromoxynil on the granule surface, and further showing an artificial line indicating where chlorine would show in the spectrum analysis, but does not.

Fig. 15 is a photographic record of a spectrum analysis taken of the granule formulation at the site shown in Fig. 10 showing a first peak of bromine and a second peak of chlorine.

## DETAILED DESCRIPTION OF THE INVENTION

In one of its broadest aspects the present invention provides a pesticide formulation containing at least one active pesticide ingredient and at least one polar/nonpolar solvent of low volatility. According to an important aspect of the present invention the formulation does not require the use of any one particular active pesticide ingredient. Surprisingly, the pesticide formulation of the present invention is useful with any foliar applied active pesticide ingredient of mixture of ingredients which are intended for preventing, destroying, repelling, or mitigating any pest and further for any use as a plant regulator, defoliant or desicant. As used herein, the term "pest" means any insect, rodent, fungus, weed, or any other form of terrestrial or aquatic plant or animal life or virus bacteria or other microorganism. The term "weed" herein means any plant that grows where not wanted.

According to another aspect of the present invention, the pesticide formulation of the present invention can be formulated using any one of a variety of polar/nonpolar solvents having a relatively low volatility.

It is to be noted that a leaf surface, or cuticle, is a primary route of entry for a foliar applied post-emergent pesticide. The composition of the wax surface and the thickness of the wax surface varies from plant species and within plant species due to environmental factors. The outer covering of a leaf, called the epicuticular wax, is amorphous and highly nonpolar. The wax is made of long straight or branched chain alkanes, sterols or pentacyclic triterpenoids with chain links ranging from approximately $C_{21}$ to $C_{35}$. The next layer of the leaf is the cutin proper layer which is semipolar and contains embedded (subsurface) wax platlets which are primarily $C_{16}$ -$C_{18}$ fatty acids, with 1 to 3 hydroxyl groups which may be terminal or intermediate on the chain. Since, portions of polar groups remain free, the cutin layer is more hydrophilic than the wax layer. The next layer is the pectin layer which is made of primarily polysaccharide polymers which are highly hydrophilic and are thus polar. The next layer is the cellulose cell wall.

This model can be better visualized as a "sponge" with the cutin as a framework and the sponge holes are the embedded (subsurface) wax and the pectin extends as strands into but not completely through the "sponge". The epicticular wax covers the surface of the "sponge".

Thus, while a gradient exists for the resistance to penetration of polar materials inward, the cuticle composition and structure is such that both lipophilic and hydrophilic pathways are present for pesticide penetration.

The most significant barrier to pesticide absorption into the shoot tissue of a plant is the cuticle which covers the surface of essentially all epidermal cells of all above-ground systems. Usually only a small portion of a pesticide is absorbed through the stomata. With aproper formulation so that the spray solution evaporates to a liquid film of high wetting and penetrating power, the active ingredient of a pesticide formulation is able to enter and move in the leaf regardless of the presence or condition of the stomata. Further, the extent to which the surface cuticle wax is a barrier to penetrating formulations depends considerably upon the solubility characteristics of the formulation and the degree to which certain adjuvants in the formulation may modify the wax layer. Thus, lipoidal solubility of a formulation in the cuticle may enhance sorption of the pesticide.

We have discovered that a pesticide formulation of the present invention containing a solvent system having both polar and nonpolar properties provides a surprisingly effective delivery system of the active ingredient to the microenvironment by establishing compatible aqueous (polar) and lipoidal (nonpolar) phases for maximum pesticide activity. The microenvironment is defined as the interface between the pesticide and its delivery system and the plant surface.

An increase in the polarity of a pesticide molecule generally enhances its inherent toxicity because of greater mobility within the hydrophilic plant transport system, whereas decreased polarity promotes penetration because of the lipophilic nature of the cuticle. Thus, nonpolar molecules penetrate better but polar molecules move inside the leaf and plant better. Since these two factors are opposed, there must be an optimum in the balance between the polar and nonpolar nature of a pesticide formulation.

For any given solvent system of this invention, the visible nonbiological effects, such as cuticle incorporation of the active ingredient or "puddling", decrease with increasing dilution. However, even when the limit of direct visible change to the plant surface is exceeded, physical and chemical changes continue which increase the pesticide activity. In particular, there is an increased true solubility of the active ingredient in the water/solvent solution over solubility of the active ingredient in water alone. A decreased rate of droplet drying is achieved by the formulation of the present invention through the selection of a polar/nonpolar solvent having a lower volatility than water. The period of absorption of the pesticide formulation of the present invention from the liquid state is prolonged. Also, the reduction in the size of the deposited crystals of active ingredient improves the distribution of the active ingredient on the plant surface and therefore improves the absorption of the active ingredient into the plant surface. A suitable solvent or solvent/diluent mixture or the mixture of a solvent(s) diluents with water should preferably have a vapor pressure below 760 mm of Hg at 20°C (which is the vapor pressure of water). The diluent generally evaporates before the solvent used since the polar/nonpolar solvent has a lower volatility, thus allowing for the prolonged exposure of the active ingredient on the plant surface.

The polar/nonpolar solvents used in the granular pesticide formulation of the present invention must be misible with a polar material, such as water, without the use of surface active ingredients. The polar/nonpolar solvent also demonstrates nonpolar characteristics. The nonpolar characteristics are measured by solubility of the active pesticide ingredient in the solvent when the active pesticide ingredient is in a relatively nonpolar form, such as, but not limited to a methyl, isooctyl, or butyl ester or the basic acid. The nonpolar characteristics are also determined by measurable solubility/misibility of relatively nonpolar materials such as mineral or vegetable oils, or any of the constituents of the plant epicuticular or subsurface wax or cutin including, but not limited to long chain alkanes, fatty ketones, fatty aldehydes, fatty alcohol, saturated and unsaturated fatty acids and fatty esters with chain links varying from $C_{21}$ to $C_{25}$ and fatty acids and hydroxylated fatty acids bound by esters linkages with chain links of $C_{16}$ to $C_{18}$.

In general, the polar/nonpolar solvents of the present invention have intermediate dielectric constants of 20-60, although there are some notable exceptions, such as dipropylene glycol methyl ether (DPM) and most of the glycol ethers. The following table lists some suitable solvents along with their dielectric solvents and vapor pressures.

| | Approximate Dielectric Constant | Approximate Vapor Pressure |
|---|---|---|
| Butyrolactone | 39.0 | 2.3mm at 25°C |
| Methyl Pyrrolidone | 32.2 | 0.5mm at 25°C |
| Dimethyl Sulfoxide | 45-48.9 | 0.6mm at 25°C |
| Dimethyl Formamide | 36.7 | 5.5mm at 25°C |
| Glycerol | 42.5 | 0.01mm at 25°C |
| Propylene Glycol | 32.0 | 0.22 at 25°C |
| Dipropylene Glycol Methyl Ether | 10.75 | 0.55 at 25°C |

Unlike other formulations, the primary function of the solvents in this invention extends beyond the physical properties demonstrated by the formulation in the concentrated form. The use of solvents is unique in this invention in that in all cases, the purpose is to optimize deposition of the formulation on foliage through elimination or reduction in the size of crystalline particles and through reaction with the leaf cuticle.

Over 150 formulations have been tested using the formulation of the present invention, incorporating a polar/nonpolar solvent of low vapor pressure into the formulation generally as the solvent. These formulations have included dry and liquid technicals, soluble salts (polar), nonpolar acids, nonpolar esters of active ingredients, in both liquid sprayable and dry granular products. Known active pesticides included in these formulations include: chlorflurenol methyl ester -systemic growth regulator and herbicide, flurenol acid -systemic herbicide, flurenol butyl ester -systemic herbicide, bromoxynil octanoate ester -contact (non systemic) herbicide, triclorpyr butoxy ethyl ester -systemic herbicide, triclorpyr triethylamine salt -systemic herbicide, chlorothalonil -contact fungicide, chlorpyrifos -contact and stomach insecticide, dicamba acid -systemic herbicide, 2, 4-dichlorophenoxy acetic acid -systemic herbicide, and mecoprop (MCPP) acid - systemic herbicide. Mixtures of these active ingredients have been prepared, and many other active pesticide ingredients have been incorporated in to sprayable formulations and have passed standard suspension, resuspension and dispersibility tests for fitness of use in commercial equipment. Failure to disperse or suspend initially, or alternatively, to solubilize in the solution, failure to resuspend, separation into liquid layers or the formation of rope-like strands, globules or large flakes constitute failure of a formulation.

The standard dispersion, suspension test is performed as follows: fill a 250 ml round bottom flask with 200 ml of tap water. Place on a magnetic stirplate with a small (1.0 inch) magnetic stir rod in the bottom of the flask. Set stir rate at "1". This produces agitation with no visible vortex on the water surface. Introduce 1 to 5 ml of the test formulation into the flask. Continue to stir for 2 minutes. Allow to stand for 1 hour with no agitation. If particles have settled at the end of 1 hour turn agitation back on for 2 minutes and observe whether all material is resuspended.

It is to be noted that many of the active ingredients of formulation have been known and tested for many years. For example, chlorflurenol is commercially available; its physical toxicological and environmental properties have been well-researched and much information about this chemical can be found. However, while the chlorflurenol active ingredient is known to be a plant regulator that is suitable for various purposes, it has not generally been satisfactory for use as a herbicide notably in view of the relatively high application rates necessary in order to achieve effective weed control as well as the resulting toxicity and cosmetic damages occurring at the locus of application.

Now, it has been found according to the invention that substantial and surprising advantages will be obtained when using the active pesticide ingredient in combination with a solvent material which has polar and nonpolar properties, has a dielectric constant generally between 20 and 60 and is less volatile than water.

Effective contact between the active ingredient and the foliage is an essential prerequisite for pesticidal action. It is influenced by physical barriers and environmental factors which inactivate or reduce the concentration of the active ingredient by adsorption and absorption. Adsorption is the adhesion in an extremely thin layer of molecules of the active ingredient to the plant surface while absorption is the uptake of the active ingredient into the plant. Effective contact is necessary before penetration of the active ingredient through the plant cuticle to the cell wall or cytoplasm can occur.

Surprisingly, we have found that a formulation comprising an active pesticide ingredient admixed with polar/nonpolar solvent of the specifications outlined above is capable of penetrating or combining with the protective waxy cuticle of a plant surface effectively enough for the increased delivery of the active ingredient to the plant cells.

Adhesion to the foliage is due at least in part to the fact that the formulation is coupled to the plant's cuticle by actually dissolving or solubilizing in the waxy cuticle. In this manner, the active ingredient in the formulation is held on the foliage to such an extent that the tendency to be physically brushed off, blown off, wiped off or washed off is considerably reduced. Further, as a result of its entrapped condition in the waxy cuticle and because of the decreased volatility of the solvent, evaporation of the formulation is slowed.

The following invention will now be explained in more detail in the following examples that illustrate, but are not intended to limit, the invention.

When a granular active ingredient is applied to a plant product using the pesticide formulation of the present invention, there is a change in appearance of the waxy cuticle in an area around and not just under the granules. When a liquid active ingredient pesticide formulations of the present invention, again, there is a mixture of small crystals and a puddling effect. The active ingredient is actually in the puddle as confirmed by an X-ray element map analysis. Incorporation of the active ingredient into the cuticle is preferable to the removing of the cuticle. The cuticle resists water such that incorporation of the active ingredient into the cuticle aids in resisting a wash-off by rain or irrigation of the active ingredient. This is demonstrated in the test results with the chlorflurenol/dicamba granular products as shown in the examples below. Further, solubilizing the active ingredient in the cuticle also increases absorption of the active ingredient into the plant.

It is desirable for the polar/nonpolar solvent to have a vapor pressure lower than water such that the overall rate of evaporation of the formulation is lowered. In the application to a locus of a liquid pesticide formulation of the present invention the formulation is diluted in water and sprayed onto the locus. The solvent, which is misible in water, is present in the droplets on the locus. As the water in the spray droplet evaporates, the solvent, having a lower vapor pressure, becomes more concentrated and there is an increase in the solubilization of the plant waxes in the droplets by the solvent. Eventually a state of equilibrium is reached with the droplet containing plant wax which has an extremly low vapor pressure, mixed with some water and the solvent which has a vapor pressure lower than water.

In addition, the preservation of the cuticle wax layer on non target plants, as opposed to complete removal of the cuticle wax layer, facilitates the pesticide entry into the plant and helps preserve one of plant's natural defense mechanisms. Further, the uniform incorporation of contact or stomach insecticides into the wax cuticle provides delivery of an insecticide since insects consuming leaf tissue or walking on a leaf surface are more likely to come in contact with the active insecticide ingredient when it is more uniformly spread out on the leaf surface rather than when it is present as isolated crystal deposits on the leaf surface.

Referring now to Figs. 1-15, the scanning electron microphotographs demonstrate the formation of smaller crystal sizes of an active ingredient when incorporated in a formulation of the present invention. The examples and photomicrographs of the granular products tested show a "puddling" or maintenance of an amorphous state.

Referring, now to Figs. 1 to 3, in particular, leaves of a philodendron plant are removed, placed in a horizontal position and wet with the equivalent of 40 gallons/A of water using a small laboratory scale sprayer. The leaf shown in Fig. 1 was then sprayed with a dilution if the commercial (EC) emulsifiable concentrate of chlorflurenol methyl ester diluted with water to give an equivalent of 40 gal./A spray volume. The leaf shown in Figs. 2 and 3, sprayed with a formulation of the present invention comprised of chlorflurenol methyl ester and dimethyl sulfoxide as the polar/nonpolar solvent at the rate of 1 lb. active ingredient/A, again diluted with water to give a 40 gal./A spray volume. The leaves were allowed to incubate for 15 minutes. Twelve millimeter diameter discs of leaf tissue were removed using a laboratory cork and tubing cutter. Specimens were prepared and examined using the scanning electron microscope. As seen in Fig. 1, examination of the deposits left by the commercial EC formulation shows large rhombic crystals typically 20-25 microns wide and 100-125 microns long. These crystals were frequently interconnected or stacked on top of each other.

The formulation of the present invention left two types of deposits totally dissimilar to those of the commercial EC, as can be seen in Figs. 2 and 3. Approximately 50% of the covered area consists of a uniform fluid coating which completely covers the underlying cells. Higher manifestation of the peripheral edges showed dissolution of the waxy plant cuticle. The remainder of the area covered by this formulation appears as thicker, plastic or waxy platelets of irregular (noncrystalline) shape. X-ray emissions confirms the presence of chlorflurenol in the deposits of both formulations.

It should be noted that in the preparation of these samples, the leaf tissue is subjected to a vacuum, which facilitates evaporation of water and high vapor pressure solvents and also simulates the accelerated evaporation of pesticide spray droplets as occurs in the field.

The commercial EC formulation, shown in Fig. 1, even when diluted, is deposited as large crystals of 25 microns by 100 microns in size. The formulations of the present invention shown in Figs. 2 and 3 is deposited as small crystals and an amorphous fluid or waxy matrix. As seen in Fig. 2, the formulation of the present invention, when applied diluted, left primarily crystalline deposits 10 to 15 microns square. The small areas adjacent some crystals and isolated areas show a solubilizing effect of the formulation. This is less than 5 percent of the total area. As seen in Fig. 3, the formulation of the present invention produces approximately 75 percent amorphous grainy deposits containing solubilized and partially solubilized active ingredient in a matrix of redeposited cuticular wax, solvent and active ingredient. The remaining 25 percent of the deposit appears as small crystals averaging 7 to 10 microns square surrounded by even smaller satellite crystals approximately 1 to 2 microns square. The presence of chlorflurenol in the redeposited matrix was confirmed by X-ray emission. Therefore, even when diluted, the formulations of the present invention produce a matrix of amorphous deposits incorporating the cuticular wax and deposits of much smaller crystalline size than found in the deposits of the commercial formulation.

This smaller crystalline size has a significant advantage in allowing maximum contact of active ingredient with the leaf tissue. The commercial EC formulation has an average crystal size of 2500 microns square which those of the invention range from 49 to 225 microns square even when excluding the smaller satellite crystals. Thus, for any given weight of chlorflurenol the formulation of this invention provides approximately 10 to 50 times the surface area for plant surface contact.

Comparisons of a known pesticide, Garlon™ 3A, formulated according to a prior art soluble salt solution with formulations of the present invention are shown in Figs. 4-9. The prior art salt solution formulation, as seen in Figs. 4 and 5, when applied to a leaf, is deposited as feathery, snowflake-like crystals with an average diameter of approximately 30 microns. A chlorine X-ray element map of the leaf shown in Fig. 4, shows the concentration of chlorine present and confirms that the active ingredient is present on the leaf as the snowflake-like crystals. It is to be noted that the scattered background "dots" on the chlorine X-ray elements map indicate the presence of naturally occurring chlorine in the leaf.

An application of the formulation of the present invention comprising trichlorpyr triethylamine (Garlon™ 3A) as the active ingredient and propylene glycol as the polar/nonpolar solvent is shown in Fig. 6. The application shows that the formulation of the present invention has solubilized the waxy cuticle and has redeposited the waxy cuticle as an amorphous matrix of solvent, plant cuticular wax and active ingredient on the intercellular depressions, or low spots, on the leaf surface. Fig. 6 also shows some wrinkling or disturbing of the plant wax layer, even where there is not a clear showing of a deposit of the formulation. It appears from Fig. 6 that the formulation of the present invention initially dissolved at least those wrinkled portions of the waxy cuticle before flowing into the low spots on the leaf surface. The chlorine X-ray element map shown in Fig. 7 of the leaf shown in Fig. 6 confirms that presence of the active ingredient in the deposits in the intercellular depressions.

The leaf shown in Fig. 8 depicts another formulation of the present invention using the same active ingredient, trichlorpyr triethylamine (Garlon™ 3A), and using a different polar/nonpolar solvent comprising glycerine. Surprisingly, this formulation of the present invention shows that the formulation acts to dissolve the waxy cuticle and redeposit the waxy cuticle rather uniformly as an amorphous matrix of solvent, plant cuticular wax and active ingredient. The formulation of the present invention spreads out on the surface of the leaf thus allowing a greater amount of active ingredient to also be spread out on the surface of the leaf. A thin layer of active ingredient spread on the leaf is more effective than discrete deposits of crystalline active ingredient on the leaf's surface. The chlorine X-ray element map shown in Fig. 9 of the leaf shown in Fig. 8 also confirms the presence of the active ingredient in the amorphous matrix redeposited on the leaf's surface.

In addition, granular formulations of the present invention are shown in Figs. 10-15. Referring now to Figs. 10-12, in particular, an application of formulation of the present invention comprising a corncob granule containing 2, 4-D dimethylamine salt solution plus bromoxynil octonoate as the active ingredients and butyrolactone as the polar/nonpolar solvent to a philodendron leaf as seen in Fig. 10. The formulation has redeposited on the leaf surface as an amorphous matrix of solvent, plant cuticular wax and active ingredients. Fig. 11, a bromine X-ray element map of the leaf shown in Fig. 10 shows the concentration of bromine present and confirms that the bromoxynil octonoate active ingredient is present on the leaf in the deposit. Fig. 12, a chlorine X-ray element map of the leaf shown in Fig. 10 shows the concentration of chlorine present and confirms that the 2, 4-D dimethylamine active ingredient is present on the leaf in the deposit. Fig. 13 is a scanning electron microphotograph of a granule of the present invention containing 2, 4-D dimethylamine salt solution plus bromoxynil octonoate as the active ingredients and butyrolactone as the polar/nonpolar solvent. A photographic record of a spectrum analysis, shown in Fig. 14, taken of the granule formulation shown in Fig. 13 shows a peak of bromine, thus demonstrating the presence of bromoxynil on the granule surface. Fig. 14 further shows an artificial line where chlorine should show in the spectrum analysis, but does not since the chlorine containing 2, 4-D dimethylamine is impregnated on the interior of the cob carrier and is not discernable by the spectrum analysis. However, as seen in Fig. 15 which is a photographic record of a spectrum analysis taken of the site shown in Fig. 10, a first peak of bromine and a second peak of chlorine are clearly seen. Thus, even though the 2, 4-D dimethylamine is not seen in the spectrum analysis of the granule, its presence is seen on the leaf surface.

Further, field test data show effective translocation of a systemic pesticide occurs when the systemic pesticide is delivered using the pesticide Further laboratory work demonstrates that the formulations of the current invention are less damaging to the natural turgidity of the plant cells than the standard EC formulation. The formulations of the present invention are thus better able to preserve the ability to function normally and translocate systemic pesticides. A chlorflurenol formulation of the present invention was compared with prior art commercial Maintain™ chlorfluenol CF 125 emulsifiable concentrate formulation, by spraying each formulation straight onto philodendron leaves prewet at 40 gallons of water. The leaves sprayed with the formulation of the present invention showed substantially less shrinkage. For example, sections of each leaf were cut with 12 mm diameters. After placing both specimens in a vacuum chamber in preparation for examination under the scanning electron microscope, the leaf section sprayed with the formulation of the present invention had shrunk by approximately 0.1 mm (less than 1 percent) while the leaf section sprayed with the prior art Maintain™ emulsifiable concentrate formulation had shrunk by approximately 0.9 mm (approximately 7.5 percent). While comparisons over time are difficult due to the effect of the scanning electron micrograph bombardment has on the cells, it is seen that the cells sprayed with the prior art emulsifiable concentrate formulation lose their turgidity and tend to be more collapsed or collapse faster than the cells sprayed with the pesticide formulation of the present invention.

The preparation of sprayable formulations using the solvents of this invention as the sole (primary) solvent in conjunction with non water soluble forms of the toxicants required development of a new and novel technology. The preferred formulations of the invention comprise nonpolar, water insoluble forms of the pesticides and polar/nonpolar solvents are the primary or exclusive solvents. The solvents of this invention preferentially partition into the water or external phase rather than the internal or disperse phase. Standard laboratory tests support dilution of formulation 1 to 200 parts water and field tests support dilutions over 1 to 2000 parts of water on a volume to volume basis. (i.e., 1/10 to 1/8 lb.ai/A from a 1.5lb/gal. material applied in 174 gallons $H_2O$/A). While the nonpolar pesticide formulation of this invention may form crystals, these crystals are extremely fine, often at or near colloidial dimensions, do not plug nozzles and are readily resuspended by agitation when settling occurs. Further, the formulations of this invention when added to a diluent, such as water, provide a mechanism to slow down or stop the unrestricted growth of toxicant crystals.

In examining dilutions of sprayable concentrates in water, use is made in the art of the visible, optical properties of the diluted material to obtain an estimate of the aggregate size of the particulate matter. This is based on the well-known Tyndall Effect which simply stated says that dispersed particles, unlike true solutions, will scatter light.

In general, the stages of optically visible effects going from smallest to largest particle size are: transparent (true solutions and suspensions of approximately 0.02 to 0.075 microns); translucent; opalescent; and opaque or milky (typical nacro emulsions ca 1 to 50 micron). There are gradients between these so that differentiation is not always absolute.

Opalescence occurs over a wide range of temperatures above the critical point of the complete miscibility of liquids. Such opalescence is due to the association of the molecules of one of the components of the system to form aggregates of colloidial dimensions. Above this critical temperature, a formerly transparent·microemulsion or micellar solution scatters light that is visible to the naked eye, so that the system is seen as translucent or opalescent.

When introduced into water, the formulations of this invention may vary somewhat in their initial reaction depending upon the hardness of the water, pH, temperature, surfactant levels, solvent levels and physical state of the active ingredient. Examination of the formulations using crystalline, nonpolar forms of active ingredient are the most informative as to an explanation of the mechanism. Formulations, upon first contact with water, may disperse as transparent liquids or in some cases as temporary milky blooms resembling an EC formulation. This rapidly clears to a clear transparent solution. The dilution then generally turns translucent and finally opalescent. With some formulations such as the chlorflurenol methyl ester C-117, the entire process may require no more than 60 to 90 seconds. Other formulations such as those containing 2, 4-D acid can go through the phase changes in 60 seconds or 24 hours, depending upon various conditions. With the MCPP acid formulations, the phase change has not proceeded beyond the transparent almost translucent step.

Dilutions containing these type formulations can be moved forward or backward in the range of visible optical effects by adjusting pH, the concentration of various ions or temperature. This demonstrates a mechanism for controlling crystal growth and particle size, a key and long term objective of pesticide formulations. Therefore, there are advantages to this type of control.

The liquid sprayable formulations of this invention made using nonpolar forms of the toxicant exist in a highly ordered state in an aqueous environment, more so than emulsifiable concentrates and other formulation types except true soluble salts. The combination of a polar/nonpolar solvent and a surfactant with both polar/nonpolar properties allows a thermodynamic equilibrium to be reacted at a smaller, more desirable, particle size.

For regulation of particle size in aqueous dilution the active ingredients are, according to the preferred formulations of the present invention, in a form which is essentially water insoluble, and the active ingredients are soluble in the polar/nonpolar solvent as defined above. In order for leaf surface reaction, active ingredients must be foliar absorbed or have as their site of activity the foliage (post-emerge).

As described and shown in the tests below, the formulation of the present invention is applicable to various forms of chemicals, types of pesticides (fungicide v. herbicide v. insecticide), (organophosphate v. benzoic acid derivation v. carboxylic acid derivatives v. phenoxies etc.), and polar/nonpolar solvents.

EXPERIMENTAL SECTION -Granular Formations

The testing results set forth below indicate that a superior non-phenoxy chlorflurenol based formulation results when chlorflurenol or chlorflurenol and dicamba are combined with a polar/nonpolar solvent which is water misible, has a low volatility, minimal photoreactivity, and the ability to soften or remove the cuticle layer of a leaf. There are a wide variety of solvents that have these properties. Testing was performed with two such solvents. The first solvent used was butyrolactone which is also commercially known as BLO®. Testing was also done with M-PYROL® , which is N-methyl 2-pyrrolidone. The resultant chlorflurenol herbicide was found to be a superior product when compared to those chlorflurenol herbicides presently available. In addition, the present composition exhibits comparable or superior results when compared to phenoxy herbicides such as, 2, 4-D (2, 4-Dichlorophenoxy acetic acid) and mecoprop (2-(2-methyl-4-chlorophenoxy) propionic acid).

Although chlorflurenol and dicamba have higher solubilities in M-PYROL than they do in BLO, BLO is currently cleared for use by the Environmental Protection Agency while M-PYROL is not. As a result, BLO was chosen as the primary solvent for testing with M-PYROL being used as an alternative.

A single non-phenoxy herbicide was prepared by adding the methyl ester of chlorflurenol with butyrolactone in sufficient quantities such that the solution contained approximately 25% by weight of chlorflurenol methyl ester, the active ingredient. A second form of the herbicide was also created by adding the methyl ester form of chlorflurenol to a mixture of butyrolactone and N-methyl 2-pyrrolidone. The BLO and M-PYROL were in a ratio of approximately 3:1. The chlorflurenol was added in sufficient quantities such that the solution contained approximately 33% by weight of the active ingredient chlorflurenol.

A third form of the herbicide was created by adding the methyl ester form of chlorflurenol with M-PYROL in a ratio of between 1:3 and 1:1.

In formulating the solutions of chlorflurenol and solvent, it was necessary to agitate the solution in order to dissolve the chlorflurenol in the BLO, M-Pyrol, or BLO/M-PYROL. In some instances, agitation did not prove to be effective in achieving complete dissolution of the chlorflurenol in the solvent. As a result, it was found that heating the solution to a temperature between 25-30° centigrade would cause complete dissolution.

From tests conducted, the following approximate solubilities at temperatures of approximately 25-30°C. were determined.

Solutes

Technical dicamba acid -86.9% acid equivalent
Technical sodium salt of dicamba acid -76% acid equivalent
Technical chlorflurenol methyl ester -95-98% total methal esters

| Solvent | Solute | Solubility for acid Equivalent Concentration |
|---|---|---|
| BLO | Technical sodium salt of dicamba | Less than 1% |
| BLO | Technical dicamba acid | greater than 25%, less than 33% |
| BLO | Technical chlorflurenol methy ester | approximately 25% |

13

| Solvent | Solute | Solubility for acid Equivalent Concentration |
|---------|--------|-----------------------------------------------|
| M-PYROL | Technical sodium salt of dicamba | Less than 4% |
| M-PYROL | Technical dicamba acid | Approximately 35% |
| M-PYROL | Technical chlorflurenol methyl ester | Greater than 25%, Less than 50% |

The higher concentrations of technical chlorflurenol methyl ester and/or technical dicamba acid with M-PYROL will form super saturated solutions. These solutions will form precipitates over time, when cooled and agitated or seeded with additional solute. Agitation and increasing temperature will redissolve the precipitate.

Once the chlorflurenol was in solution, it would then be applied to ground corncob particles to form a granular product. The concentration of the granular product was then dependent upon the concentration, by weight, of the active ingredient in the solvent and the amount of the solvent which was applied to the cob carrier.

Two additional herbicides products were created which contained two non-phenoxy herbicides, chlorflurenol and dicamba (3, 6-dichloro-o-anisic acid).

The formulation of the chlorflurenol is a BLO or BLO/M-PYROL or M-PYROL solution plus dicamba was formed in one of two methods. In both methods, a carrier consisting of ground corncob particles was used to form a granular product. The first method involved a two-step process. The first step consisting of spraying a dimethylamine solution of dicamba onto the corncob carrier. The second step was to then spray a solution of chlorflurenol methyl ester and solvent of BLO, M-PYROL, or BLO and M-PYROL onto the corncob carrier. The overall concentration of the chlorflurenol and dicamba in the resultant product was controlled by the regulation of the quantities of the individual components applied to the corncob carrier.

The second method of forming a chlorflurenol/dicamba herbicide involved adding preselected quantities of chlorflurenol methyl ester and the acid form of dicamba into a solvent consisting of M-PYROL. Once combined, the solution was then sprayed onto the corncob carrier. While both methods yielded effective herbicide products, the second method involved the use of a common solvent, thus reducing the number of preparation steps as compared to the first method of formulation. Once the granular herbicide was formed it could then be applied strictly as a herbicide or in combination with a fertilizer to yield a weed and feed product.

In order to understand the significance of the invention over the state of the art formulations of chlorflurenol, it is necessary to establish a reference point for the previous limited herbicidal activity of this pesticide and the comparative responses of the two common application methods, for foliar absorbed herbicides, that is, sprays and the use of lightweight granular carriers.

It is well-known in the art that the application of a foliar absorbed herbicide on a lightweight carrier such as ground corncob, expanded vermiculite, rice hulls, etc., which is common practice in the production of fertilizer/herbicide combination products for use on ornamental turfs (weed and feeds) generally requires a higher level of active ingredient be used per acre to provide the equivalent initial response of a foliar applied liquid spray.

Granular formulation, unless made with volatile esters of the active ingredient, which then pose hazards to neighboring non-targeted species of vegetation such as ornamental plants and shrubs, require water to move the herbicide from the granular carrier onto the weed leaf surface. This movement of the active ingredient is normally limited to available moisture. Such is not true of herbicide sprays applied with water as a vehicle.

The general rule applied in the trade is that one and one-half to two times as much herbicide should be applied in a properly formulated foliar applied granular product as is needed in a properly formulated sprayable product for equivalent response. Conversely, if equivalent amounts of a foliar active herbicide are applied by the two methods mentioned, the initial activity of the granular product will typically be less than that of the spray. As a result, in reviewing the test data below, it should be kept in mind that spray formulations will give quicker responses and control when compared to an equal concentration of the product in granular form. This will be demonstrated in the test data presented.

As will be demonstrated below, numerous tests indicated that while previous formulations of chlorflurenol may temporarily supress the growth of broadleaf weeds at rates below 1 pound of active ingredient per acre, rates of 1 to 2 pounds or higher are required to provide consistent commercially acceptable levels of control (80% or better) on weeds common to turf grass areas and somewhat resistant to its herbicide effects.

Having thus generally described the invention, it will now be referred to by reference to the following examples.

EXAMPLE 1

Chlorflurenol as the emulsifiable concentrate was applied in the late spring to a mature weed infested stand of common Kentucky bluegrass at the rates specified using a spray volume of 50 gallons of water per acre with a manual sprayer at 40 pounds per square inch of carbon dioxide pressure. Plots were of a randomized complete block design and replicated three times. Percent weed control of buckhorn plantain (a 2, 4-D sensitive weed) and white clover (a 2, 4-D resistent weed) were recorded at 48 days after treatment. The results are set forth in Table 1.

The data disclosed in Table 1 demonstrates that rates between 1 and 2 pounds of active ingredient per acre of the commercially acceptable emulsifiable concentrate formulation are required for control of both weed species.

EXAMPLE 2

Another series of tests conducted at a second site, using the same test protocol as explained in Example 1, included the patented herbicidal combination of 2, 4-D/MCPP/dicamba formulated as the dimethylamine salt formulation as a standard. Plots were rated at 68 days after treatment for overall broadleaf weed control. The results are indicated in Table 2.

As can be seen from the results in Table 2, this data further substantiates the data presented in Example 1, namely that approximately 2 pounds of chlorflurenol per acre is required for general weed control equivalent to a standard phenoxy based herbicide applied in a like manner, that is a foliar spray.

The chlorflurenol used in Table 2 was in the form of an emulsifiable concentrate. Additional testing was also performed using a granular product which contained chlorflorenol as at least one of the active ingredients. Initial testing of a granular form of the herbicide involved the use of a currently known method of forming granular herbicides. The granular product could be used by itself or in combination with various fertilizers. The method of forming this type of granular product involved the use of a finely divided crystalline powder of chlorflurenol methyl ester which was adhered to ground cobs using a lightweight oil. This practice of adhering a finely divided powdered herbicide to a carrier using a compatible sticking agent such as various oil, water, liquid fertilizers and the like is a typical and accepted technique used by the industry.

Only one other fertilizer/chlorflurenol formulation is familiar to the Applicant, this being a combination of the chlorflurenol methyl ester crystalline powder and a powdered sodium salt of the phenoxy herbicide MCPA in a ratio of approximately 1 part to 3 parts, produced by Ruhr Stiksoff of Germany.

The finished formulation is applied to yield approximately 0.45 to 0.54 pounds of chlorflurenol methyl ester and approximately 0.71 pounds of MCPA per acre. Although the Applicant is not completely familiar with the technique used by Ruhr Sticksoff, it is known that the herbicides are applied in a powdered form to the outside of the fertilizer granule and made to adhere in a manner similar to the Applicant's corncob granule form.lation.

The granules coated with the chlorflurenol were then mixed with a fertilizer to yield a weed and feed type product. Beside the chlorflurenol corncob granule described, a chlorflurenol and dicamba corncob granule was also prepared. In the later, the dicamba was applied to the corncob granule as the water solution of the dimethylamine salt.

These prepared weed and feed products containing chlorflurenol were evaluated by the Applicant in Toledo, Ohio, at Purdue University and at several sites in Indiana and Illinois.

EXAMPLE 3

A total of seven product formulations were evaluated on a weed infested stand of mature Kentucky bluegrass at West Lafayette, Indiana, during May of 1981. Two of the seven products tested were standard products using 2, 4-D/MCPP/dicamba dimethylamine formulations which were applied in both a spray and granular form. The third product was an emulsifiable concentreate of chlorflurenol which is also commercially available. Products 4 through 6 involved chlorflurenol granular weed and feed products in varying rate applications formulated under the previously described state of the art method. The seventh and final product was a combination of chlorflurenol and dicamba on a granular weed and feed product which was also formulated under the above described method for granular products.

Test design was a randomized complete block with three replications. All granular products (weed and feeds) were applied at a rate of 3.0 pounds of finished product to 1,000 square feet. Applications of liquids were made with a total volume of 50 gallons per acre using a manual sprayer at 40 pounds per square inch of carbon dioxide pressure. The nozzle used for the manual sprayer was 9504 E(SS). Dominant weed species were dandelion (2,4-D sensitive) and black medic, white clover, mouse-ear chickweed (2, 4-D resistent).

The test results for Example 3 are shown in Table 3. A discussion of the results follow Example 5, as Examples 3, 4 and 5 all employed the same test methods.

EXAMPLE 4

Tests were conducted in an identical manner to the procedure outlined in Example 3 except that the applications were made in mid-August as opposed to May. The test results are summarized in Table 4 and a discussion of those results follows Example 5.

EXAMPLE 5

Testing was conducted in a manner identical to the procedures outlined in Examples 3 and 4. Applications were at a site in Lisle, Illinois, in late May with average weed control determined by species. The results of this test are indicated in Table 5.

Examples 3, 4 and 5 with their accompanying data in Tables 3, 4 and 5 are respresentative of the findings on the herbicidal behavior of chlorflurenol emulsifible concentrate and state of the art weed and feed products made with chlorflurenol and chlorflurenol/dicamba. These results indicate that:

1) The emulsifible concentrate of chlorflurenol when applied at a rate of 1 pound of active ingredient per acre does not provide as quick or complete a general broadleaf control as the standard liquid treatment of 2, 4-D/MCPP/dicamba at accepted rates;

2) To obtain general weed control at 21 to 40 days post treatment equal to the granular weed and feed product containing 2, 4-D/MCPP and dicamba dimethylamine salts at rates of 1.7 plus 0.53 plus 0.125 pounds acid equivalent per acre, a granular weed and feed containing chlorflurenol alone and produced using the cited method would require a minimum of 2 pounds of active ingredient per acre; and

3) A granular weed and feed product containing both chlorflurenol and dicamba produced using the cited method would require more than 1 pound of chlorflurenol methyl ester per acre when combined with 0.1575 pounds acid equivalent per acre of dicamba to equal the general weed control of the 2, 4-D/MCPP/dicamba dimethylamine weed and feed at 1.17 plus 0.53 plus 0.125 pounds acid equivalent per acre.

For examples 6, 7 and 8, the present invention was used and involved the formulation of a herbicidal compound which comprised one or more active ingredients dissolved in one or more polar/nonpolar solvents. The herbicide compositions to be used as formulating concentrates were prepared using the following formulae:

Formula A -1 part chlorflurenol methyl ester plus three parts butrylactone (BLO)

Formula B -2 parts chlorflurenol methyl ester plus three parts butrylactone plus 1 part methyl pyrrolidone - (M-PYROL).

To portions of the BLO/M-PYROL/chlorflurenol formulating concentrate so produced were added various surfactants to equal 10% by weight surfactant and 90% by weight original concentrate solution. A portion of the Formula B was already retained to be used with no added surfactant.

Formula A produced a clear solution containing 25% chlorflurenol. Formula B produced a slightly cloudy suspension which upon heating in hot tap water (approximately 50°C.) became a clear solution containing 33% chlorflurenol. These formulating concentrates were used to prepare weed and feed products in the following manner.

The dimethylamine salt of dicamba was sprayed onto a ground corncob carrier while mixing and allowed to dry. The formulating concentrate contained chlorflurenol and BLO or BLO plus M-PYROL or BLO plus M-PYROL plus surfactant was then sprayed onto the ground corncob while mixing. The impregnated granules were then mixed with a fertilizer base to yield 28-3-9 analysis weed and feed product, (28% nitrogen on an elemental bais, 3% phosphate on an oxide basis and 9% potassium on an oxide basis). It should be noted that the rate of corncobs remained relatively constant in all formulations with the amount of formulating concentrate varied to achieve the desired rate of active ingredient per acre. A standard weed and feed formulation was also prepared in a similar manner using the dimethylamine salts of 2, 4-D/MCPP/dicamba. These formulations were then applied as further described in Examples 6, 7 and 8.

## EXAMPLE 6

A screening study was conducted in Toledo, Ohio, beginning in June of 1981. The plot sizes were 200 square feed and the sites were composed of sparce yet mature stands of Kentucky bluegrass and perennial Ryegrass with 70-80% broadleaf weed cover. Weed populations included dandelions, plantains, white clover, black medic, curly dock, common and mouse-ear chickweed.

Each plot was sprayed with water at a rate equivalent to 4 gallons per 1,000 square feet immediately prior to application of the granular treatments. Finished weed and feed formulations were applied to 3.5 pounds of product per 1,000 square feet using a standard drop spreader. Plots were evaluated by measuring the square feet of broadleaf weeds versus the untreated checks. The results of this testing are set forth in Table 6. A discussion of the results of Example 6 are set forth following Example 8.

## Example 7

Plots were laid out as described in Example 6 with the following changes. Plots sizes were reduced to 50 square feet. In addition, treatments added included straight chlorflurenol/BLO weed and feeds and chlorflurenol/BLO plus dicamba weed and feeds, all treatment being at lowered rates relative to Example 6. Weed cover was 22-23.5% in the non-herbicide treated check plots and consisted primarily of white clover, plantain and dandelions. Applications were made during the month of September, 1981. The test results for Example 7 are indicated in Table 7 and a discussion of these results follows Example 8.

## EXAMPLE 8

Fertilizer/herbicide formulations were prepared using the dimethylamine salt of a dicamba and the chlorflurenol formulating concentrate using BLO or BLO and M-PYROL as previously described. In addition, the following herbicide formulating concentrates were prepared:
1) Chlorflurenol methyl ester plus M-PYROL to a concentration of 25% active chlorflurenol; and
2) Chlorflurenol methyl ester and dicamba acid plus M-PYROL to yield the following concentrations:

| Chlorflurenol methyl ester | Dicamba acid |
|---|---|
| 23.9% | 18.8% |
| 28.0% | 17.7% |
| 19.1% | 20.0% |

These formulating concentrates with M-PYROL were used to prepare fertilizer/herbicide combination products using a corncob carrier as previously described with the exception that the formulating concentrates containing both chlorflurenol methyl ester plus dicamba acid required a single rather than a double impregnation of the corncob carrier.

Treatments were applied using a standard drop spreader to 67 square foot plots of common Kentucky bluegrass interspersed with patches of creeping bent grass. Plots were sprayed with water at a rate equivalent to 4 gallons per 1,000 square feet immediately prior to application. Two standrad 2, 4-D/MCPP fertilizer/herbicide combination products were employed for comparative purposes. All plots were replicated three times. All products were applied during July, 1981 at a rate of 3.5 pounds of formulation per 1,000 square feet. Control was evaluated by comparing decline in total area of broadleaf weed cover in the individual treatment plots before and after treatment. Weed cover prior to treatment ranged from approximately 18-70% with dominant species being white clover, plantain, dandelion, black medic and yellow wood sorrel. The results of this tests are indicated in Table 8.

From the data presented in Tables 6, 7 and 8, it was clear that most formulations and rates tested using the present invention can provide control equivalent to high application rates of 2, 4-D/MCPP and 2, 4-D MCPP/dicamba as measured by total decline of broadleaf weed cover over a period of 12-66 days, when applied to dampened turf.

Variations and relative susceptibility to a herbicide or herbicidal combination by weed species and variation in weed species distribution will affect comparative performance. The above data indicates that applications of the present invention using chorflurenol at rates of 0.25 pounds per acre or higher will provide broadleaf control comparable to standard phenoxy based herbicides at higher levels. In herbicide combinations containing more than one component, generally the ratio of the components, relative to their individual activities, required to provide equivalent control is inversely proportional. As a result, when dicamba is added to the chlorflurenol/solvent combination, the concentration of the chlorflurenol can be lowered with no loss in performance. This approach utilizes the synergistic response of chlorflurenol and dicamba as specified by Jacobi et al. U.S. Patent No. 3,506,434. This data also supports the finding that in granular formulations, rates as low as 0.125 pounds of chlorflurenol per acre in combination with levels of dicamba as low as 0.082 pounds acid equivalent per acre were generally giving results which were equal to or superior to the higher rates of the phenoxy based standard treatments.

A general review of the data presented thus far indicates that signficant reductions in application rates while still maintaining comparable or superior control are achieved through the use of the present invention as compared to the application and control rates possible with current emulsifiable concentrates and granular formulations.

For Examples 9-14, fertilizer/herbicide combination products were prepared using the chlorflurenol methyl ester/BLO formulating concentrate (25% concentration of chlorflurenol) and the dimethylamine salt of dicamba as previously described. For comparative purposes, identical fertilizer/herbicide prducts using commercially available dimethylamine salt solutions of 2, 4-D, MCPP and dicamba were likewise prepared.

In the following examples, the weed and feed products produced using the polar/nonpolar solvent BLO are designated "CF/D-PN" to differentiate them from previous formulations. Those standard formulations made with 2, 4-D/MCPP and/or 2, 4-D/MCPP and dicamba dimethylamine salt are identified as "2, 4-D/MCPP DMA or 2, 4-D/MCPP/dicamba DMA.

## EXAMPLE 9

Testing was done at a Nebraska site during the month of August, 1981, on tall fescue turf which was maintained at a 3 inch cutting height. Plot sizes were 6 by 12 feet with the plots being dampened with water spray prior to treatment. A randomized complete block design was utilized with four replications and six treatments per replication using a Gandy drop spreader. All materials were applied at a rate equivalent to 3.5 pounds of product per 1,000 square feet. The weed population consisted primarily of buckhorn plantain, white clover and black medic. Supplemental irrigation was applied on a weekly basis. The results of Example 9 are indicated in Table 9.

The results of Table 9 indicate that all chlorflurenol/dicamba treatments, except at the lowest chlorflurenol application rate, gave satisfactory control of all three weed species tested. In addition, no herbicidal injury (phytotoxicity) was observed on the turf grass species tested.

With the exception of applying a weed and feed product during mid summer stress, the experiment reasonably duplicates a homeowners application to a maintained turf grass lawn following normal use directions. Thus, this data indicates that low rate applications of chlorflurenol and dicamba can be utilized by a homeowner in the treatment of his lawn while achieving results which are comparable to high application rates of currently available phenoxy based herbicides.

## EXAMPLE 10

Testing on Kentucky bluegrass turf was conducted during the month of May, 1981, at a test site in Iowa. The turf was maintained at a 3 inch cutting height. Randomized complete block design with 10 by 5 foot plot sizes replicated four times were used in the testing. Heaving weed infestation consisting primarily of dandelion, broadleaf plantain, white clover and black medic was observed. Treatments were applied with a hand-held shaker. Only moisture from natural condensation was present on the leaf surfaces during application. A rain of 0.5 inches fell shortly after treatment. Weed control was determined by physical count of the number of dandelion plants present in the plots 68 days after treatment when compared to the count of plants in each plot prior to treatment. In addition, 7 days after treatment, the speed of response of each of the treatments was measured. The results of this test are indicated in Table 10.

As measured by the effect on weeds at day 7 in Table 10, the speed of herbicide response of the present invention was equal to or better than the high rates of the standard phenoxy based treatments. Control was equivalent or better than the phenoxy based materials. Unexpected rain following herbicide application is not an unusual occurence in the turf grass industry. The results showed that the surprising effectiveness of the present invention is still prevalent under these types of adverse conditions and supports the advantage of incorporation of active ingredient into the cuticular wax to increase rain resistance.

## EXAMPLE 11

The experiment in Example 11 consisted of a repeat of Example 10 on an adjacent site during the month of June, 1981. Again, plots were not dampened before treatment and the only moisture present on the weed foliage was that present from condensation. The temperature at the time of application was 75°F. and no rain fell for several days following application. Thus, there was a minimal amount of available moisture.

Treatments of 2, 4-D plus MCPP and 2, 4-D plus MCPP plus dicamba in a water spray using a carbon dioxide sprayer and 2 gallons of water per 1,000 square feet were also applied. The results of this test are indicated in Table 11.

None of the granular formulations provided effective control because of the lack of moisture present on the weed leaf surface. This is obvious by observing the levels of control provided by the liquid application of 2, 4-D/MCPP and 2, 4-D/MCPP/dicamba dimethylamine, however, the chlorflurenol/dicamba treatment did provide a herbicide response equal to or better than the high rates of the phenoxy based granular products. The chlorflurenol/dicamba treatments also provided control on dandelions equivalent to the phenoxy based granular products. Except for the lowest rates tested, the chlorflurenol/dicamba treatments according to the present invention provided some white clover control while the 2, 4-D/MCPP/dicamba granular did not provide control.

A comparison of the initial speed of response data from both Examples 10 and 11 indicates that under both conditions of extreme drought and moisture excess, the chlorflurenol/dicamba combination in a BLO solvent when applied in a granular form still provides equal or superior response to standard phenoxy based on compositions. This unexpected result is especially significant when it is understood that currently available chlorflurenol containing herbicides are much slower in response time as compared to phenoxy based herbicides. An example of this is the chlorflurenol and MCPP containing herbicide formulated as an emulsifiable concentrate called Ortho Weed-B-Gon for Southern Grasses which as part of its use instructions indicates that the activity of Weed-B-Gon for Southern Grasses may not be evident for at least 2-3 weeks after application and complete control of listed weeds may take 4-6 weeks. This same slow response time is further supported by the data in Tables 3, 4 and 5 wherein the emulsifiable concentrate and state of the art granular forms of chlorflurenol with or without dicamba were compared to current phenoxy based herbicides.

Finally, the results of Examples 11 indicate that there was no phytotoxicity recorded as a result of the use of the chlorflurenol/dicamba/BLO formulation.

EXAMPLE 12

During the month of June, 1982, testing was conducted upon Kentucky bluegrass in Virginia. The turf was maintained at 1 3/4 inches in height. Randomized complete block design with three replications was conducted on 6 by 12 foot plots. The plots were dampened at the time of treatment and were irrigated once at 1 inch. The primary weeds contained in the plots are indicated in Table 12.

The 2, 4-D/MCPP weed and feed at 1.5 plus 1.5 pounds acid equivalent per acre was deleted from the study and an identical product using 2, 4-D/MCPP/dicamba dimethylamine salt at rates corresponding to those used on sensitive southern turf grasses was substituted. The results of those tests are indicated in Table 12.

The test results indicates that weed control on the species evaluated was, in general, equal to or better than the standard phenoxy based treatment while still exhibiting no phytotoxic results.

EXAMPLE 13

Bermuda grass turf was tested during the month of May, 1982, and conducted in Virginia. The turf was maintained at a height of 1 1/2 inches. The same testing procedures used in Example 12 were followed except that no supplemental irrigation was applied. As some herbicides will stunt Bermuda grass growth and delay its recovery from dormancy, percent Bermuda grass ground cover before and after treatment was recorded as a second measure of turf grass damage. The test results are indicated in Table 13.

The test results indicate that no turf grass damage was evident either by turf grass discoloration or by a reduction in the rate of Bermuda grass ground cover. Weed control of yellow wood sorrel and purslane speedwell with the chlorflurenol/dicamba was within the range of control demonstrated by the accepted phenoxy based treatments.

EXAMPLE 14

The three chlorflurenol/dicamba weed and feeds previously described and the 2, 4-D/MCPP/dicamba dimethylamine salt formulated weed and feed with rates of 0.3 plus 1.37 plus 0.11 acid equivalent respectively, were applied to 5 by 10 foot plots in randomized complete block design with four replicates of each treatment to monocultured stands of three cultivars of St. Augustine turf and to one stand of centipede grass in Florida during the month of August 1982. These two turf grasses are of high economic importance in the southern United States. In addition, St. Augustine is sensitive to many of the commonly used herbicide treatments. The 2, 4-D/MCPP/dicamba rate selected for these tests is reflective of the generally recommended practice to reduce levels of 2, 4-D to decrease phytotoxic turf grass response and to increase levels of MCPP to recover the weed control lost. The test results are indicated in Table 14. Note that the ratings of "3" or higher are considered unacceptable levels of phytotoxic damage.

The test results indicated that the standard phenoxy based treatment was tolerated by centipede grass but was unacceptable to marginally acceptable on all cultivars of St. Augustine. The chlorflurenol/dicamba formulations, however, were easily tolerated by all cultivars with average ratings less than 1.

From the foregoing, it is apparent that the present invention yields a herbicidal composition with unexpected results. With application rates of active ingredient far below effective rates for current chlorflurenol and phenoxy based compounds, the present invention gave equal or superior performance results. Lower application rates gave quicker response time than the present chlorflurenol emulsifiable concentrates and granulars and a response time equal or superior to phenoxy based compounds. The present invention also gave equal or superior control of broadleaf weeds at its lower rates when compared to both current chlorflurenol and phenoxy based compounds. In addition, these results were exhibited by the present invention even under conditions of drought stress and excessive irrigation.

Testing also indicated that the present invention was able to control a wide variety of broadleaf weeds with no phytotoxicity to the turf species. This was even true with grasses such as St. Augustine which are particularly sensitive to phytotoxicity. Furthermore, the chlorflurenol and solvent combination exhibited limited sensitivity to sunlight and water whereas chlorflurenol is normally photosensitive and unstable in water.

Finally, the combination of chlorflurenol with a polar/nonpolar solvent such as BLO or M-PYROL has increased the activity of chlorflurenol from a growth retardant to an actual herbicide.

While testing was done primarily on the control of weeds in ornamental turf species, it should be understood that the present invention has the wider application of a herbicidal composition capable of controlling vegetation in general.

## EXAMPLE 15

A 6.25% granular formulation of chlorothalonil was prepared by spraying 15 grams of a solution containing approximately 42% chlorothalonil dissolved in methyl pyrrolidone onto an 814 mesh corncob carrier while mixing. The resulting granule was allowed to reach equilibrium for several days before proceeding with the experiment. A philodendron leaf was prewet at a rate equivalent to 40 gallons/A water. Granules prepared above were placed on the leaf surface and then sprayed with another 80 gallons/A of water to facilitate leaching of the formulation from the carrier. The specimen was allowed an incubation period of 30 minutes before the granules were removed, the leaf prepared and examined under a scanning electron microscope.

Examination at 50 X magnification reveals a change in the normally uniform and regular leaf surface in the areas under the granules. These areas appeared smoother with the typical crater-like depressions of the leaf filled in. Under 500 X magnification, a fluid-like waxy material was clearly visible. This difference was especially discernable at the periphery where treated and untreated surfaces could be observed simultaneously. The affected area extended for a considerable distance from the site of the actual granule placement with the fluid effect radiating from granule site. The X-ray analysis confirmed the presence of chlorothalonil in the deposits. This experiment demonstrates that M-PYROL is likewise a suitable solvent and that chlorothalonil, a contact fungicide can be incorporated into the pesticide formulation of the present invention.

## EXAMPLE 16

Three granular formulations were prepared:

### A. 8.7 % 2,4-D granule

by weight 85% 814 mesh corncob
15% 2,4-D dimethylamine salt solution at 66.6%'2,4-D DMA or 57.9% acid equivalent.

### B. 2.9% Bromoxynil Granule

by weight 90% 814 mesh corncob
10% Bromoxynil Octonoate/Butyrolactone solution
(42.4% Bromoxynil Octonoate equivalent to 29.13% Bromoxynil)

### C. 2.65% Bromoxynil/5.27% 2,4-D Granule

by weight 81.8 814 mesh corncob
9.1% Bromoxynil Octonoate/Butyrolactone solution (42.4%) followed by 9.1% 2,4-D dimethylamine salt solution at 66.6% 2,4-D DMA.

Bromoxynil and 2,4-Dichlorophenoxy acetic acid were selected for this experiment because the X-ray emission analysis technique can differentiate between $Cl^-$ and $Br^-$ emissions making possible qualitative determinations between deposits of these two herbicides (two $Cl^-$ are present in 2,4-D while the bromoxynil molecule contains two $Br^-$). Corncob was chosen as the carrier because it has the unique property of possessing two separate absorption sites -one for water or water solution and a second for oil-like materials.

In preparation for these tests various percentages of BLO/Bromoxynil solution were applied to cob carriers. A maximum free flowing end point for BLO/Bromoxynil was determined to fall between 10 and 12% of the total weight of the finished granule. Since the normal dry free flowing end point of 814 mesh corncob grit for water is approximately 25% by weight and the dry free flowing end point for oil-like materials on this same carrier is between 10 and 15%, the BLO/Bromoxynil solution is anchored to the cob oil absorption site.

These three granules were first examined under the scanning electron microscope and subected to Cl⁻ and Br⁻ X-ray emission analysis. The test results indicate no visible deposits on any of the three granules examined except when X-ray emission is used. Bromine was readily detected on the surface of granule "B" and granule "C". Chlorine was not detected in any of the three granules. This fact confirms that the oil-like materials are absorbed primarily on the surface of the cob while water and water solutions are absorbed internal to the cob granule since the scanning electron microscope only penetrates a few angstroms into the cob structure.

In separate tests, the granules were applied to prewet philodendron leaves, rewet, and incubated as previously described. Examination of the deposit left by granule "A" shows long needle-like crystals of 2, 4-D approximately 20-25 microns long with no change to the leaf cuticle.

Granule "B" shows a deposit similar to other deposits of the pesticide formulation of the present invention except that a few stray particles were also noted.

Granule "C" again shows a deposit characteristic of the pesticide formulation of the present invention with no needle-like crystals. The X-ray analysis of this deposit however, shows the presence of high levels of both Br⁻ from bromoxynil and Cl⁻ from 2,4-D.

This experiment confirms that the pesticide formulation of the present invention is useful with a contact herbicide (bromoxynil), and that when, the pesticide formulation is sprayed on a granule carrier, the formulation acts to deposit not only the active ingredient formulated with the solvent but also associated herbicide in the same amorphous, fluid, reducing crystal formation on the leaf surface.

## EXAMPLE 17

A granule was prepared using a light and coarse chaff corncob carrier and a solution of 20.5% chlorflurenol methyl ester dissolved in butyrolactone at a ratio of 7 parts carrier to 1 part CF/BLO solution. The granule was applied to a prewet philodendron leaf and treated as in previous examples. The test results indicate the area radiating from the granule was amorphous fluid-like deposit containing chlorflurenol as confirmed by X-ray analysis.

## EXPERIMENTAL SECTION -Liquid Formulations

It should be noted that when using the pesticide formulation of the present invention as a usable sprayable product the formulation must be capable of use with water insoluble forms of technical pesticides. A difference between the sprayable liquid formulation of the present invention and the prior art formulations is best revealed by looking at the basic existing types of sprayable products. These include: wettable powders, water dispersible granulars, soluble salts, fluid flowables, and emulsifiable concentrate formulations.

The liquid formulation of the present invention can be described as newly discovered although similar in some respects to the fluid flowables, emulsifiable concentrate and soluble salt solution formulations. In the liquid sprayable formulation of the present invention the active ingredients and adjuvants are in true solutions in the solvent and in the concentrated end use product. In contrast, the fluid flowable formulation is dispersed and suspended as discrete particles in the liquid media whether in the concentrated end use product or in a dilute, ready-to-use state.

The liquid sprayable formulation of the present invention is different from an emulsifiable concentrate formulation by definition of the term itself. An emulsifiable concentrate forms an emulsion when added to water. An emulsion is a stable mixture of two or more immiscible liquids held in suspension by small percentages of substances call emulsifiers. The formulation of the present invention, whether liquid sprayable or granular, has the requirement of using a water miscible solvent. Thus, according to the formulation of the present invention, two miscible materials are mixed rather than two immiscible ones.

Further, the liquid sprayable formulation of the present invention is different from soluble salt formulations in that the active ingredient product does not necessarily have to be in a water soluble form. Chlorflurenol methyl ester which has water solubility of 0.0018 grams/100 grams water is such an example. In addition, the formulation of the present invention, when made with relatively water insoluble ingredient products, does not totally solubilize in water.

Although each individual formulation of the present invention behaves somewhat differently based on active ingredient, physical state of the active ingreident (liquid or solid) and of polar/nonpolar solvent used and relative proportion of each, a characteristic pattern of behavior can be generalized when the formulation is introduced to water as follows:

When 1-5 ml of the formulation of the present invention using a solid, water insoluble active ingredient is introduced to mildly agitating water, a milky bloom somewhat similar to that of an emulsifiable concentrate or fluid flowable is usually produced. Unlike emulsifiable concentrate or fluid flowable formulations this bloom is temporary, frequently lasting only 1 to 3 seconds as the fluid is dispersed. Following this, the mixture may under go a very dramatic phase change as is the case with chlorflurenol methyl ester, flurenol acid or flurenol butyl ester in which the mixture appears to form a clear solution or micro-emulsion which typically last 20-25 secs. The mixture then rapidly shifts to a dispersion/suspension of very fine particles which give the mixture an opalescent appearance. With other active/solvent systems of this invention, the mixture may go almost instantly to a fine dispersion which is nearly clear to faintly cloudy in appearance. Again, depending on the active and polar/nonpolar solvent formulation, the particles may remain suspended indefinitely or may settle out within 1 to 4 hours. The settled material is easily resuspended by agitation of the formulation even after several days of sitting.

A similarity between the liquid sprayable formulation of the present invention and fluid flowable formulation exists in that both ultimately end up as suspensions of particles in active ingredient. However, one key difference between the formulation of the present invention and the prior art fluid flowable, wettable powder or water dispersible granular formulations is that the size of the suspended particles in the latter formulations is dependent on the finite limitations of the grinding equipment used to mill the active ingredient and any inert carrier or filler such as clay. Fluid flowables, water dispersible granular and wettable powder formulations are mechanically ground to a specific particle size range. The process can be laborious, time consuming and costly when very fine particles are required. Once the solid particles are milled to a specific size, they can not become smaller when introduced into the solution to be sprayed.

In the sprayable formulation of the present invention, particle size is not determined by a mechanical process so that the ultimate size of the particles of active ingredient in the formulation of the present invention is not limited by mechanical processing equipment. Rather, the particle size of the active ingredient in the present formulation is determined by a combination of physical and chemical reactions between the active ingredient, solvent, surface active agents and the diluent used. These reactions include dilution, level of agitation, solubility (miscibility) of the solvent in water, solubility of active ingredient in the solvent itself and the solvent/water mix activity, and optional use and concentration of surface active agents and the other agents added to a final commercial product of the formulation of the present invention. The present formulation allows for finer control of particle size and is called a water dispersible solution formulation in order to differentiate it from prior art formulations.

The formulation of the present invention addresses the need for a complete pesticide formulation delivery system. The present formulation offers optimum performance at the critical point of interface between the plant and the active ingredient. Rather than developing products which are first suitable from a physical handling viewpoint and then attempting to increase pesticide activity, we have isolated the requirements necessary for maximum activity, as can be seen by referring to the examples below.

EXAMPLE 18

An insecticide formulation of the present invention was prepared using chlorpyrifos as the active ingredient, as follows:
50% dipropylene glycol methyl ether (Dowanol™ DPM),
35% Dursban™ technical containing 94% chlorpyrifos,
15% Stepan PCW 218, by weight.
The formulation was mixed with water and sprayed on philodendron leaves at 1 lb. active ingredient in 40 gallon/A spray volume. The chlorpyrifos insecticide formulation of the present invention was compared with a prior art formulation of a standard chlorpyrifos 50% wettable powder formulation.

23

The test results indicate the prior art wettable powder formulation produces readily identifiable outlines of the spray droplets. The highest concentration of particulate matter is on the periphery of the droplet outline in a more or less continuous circle with a gradually decreasing gradient of individual particles progressing inward. Under X-ray emission, these particles show a high concentration of silica which confirms that the particles are a mineral carrier most likely a clay. This type deposit is characteristic of a wettable powder.

The formulation of this invention with chlorpyrifos produced a large uniform amorphous fluid deposit on the leaf surface. This experiment demonstrates the use of the present formulation is useful with an insecticide and shows the superiority of the formulation of the present invention over prior art wettable powder formulations.

## EXAMPLE 19

Various formulations of the systemic herbicide triclorpyr triethylamine (GarlonTM) were diluted with water and sprayed onto philodendron leaves at rates of 0.5 to 1.0 lbs acid equivalent A at a spray volume of 40 gallon/A. Preparation and examination were as previously described.

## Triclorpyr Formulation:

1. GarlonTM 3A (water solution of the triethylamine salt of triclorpyr)
2. GarlonTM 3A mixed 1 to 1 by volume with glycerin (glycerol, glycyl alcohol)
3. GarlonTM 3A 1 to 1 by volume with propylene glycol (1,2-propanediol) (See Figs. 6 and 7).
4. GarlonTM 3A mixed 1 to 1 by volume with N,N-dimethyl formamide (DMF)

The test results indicate the prior art formulation of the triethylamine salt (GarlonTM 3A) is deposited as feathery snowflake-like crystals with an average diameter of approximately 30 microns as shown by Figs. 4 and 5. When a polar/nonpolar solvent of the specification of this invention is added to the standard GarlonTM formulations, the crystalline deposits are eliminated and the TEA soluble salt form of triclorpyr is deposited in the characteristic, amorphous fluid state. The X-ray emission analysis, as shown by Fig. 7, for example, confirms the presence of the active ingredient in the deposits of all three formulations.

This experiment shows that the addition of the polar/nonpolar solvents of this invention to a prior art soluble salt formulation of a pesticide produces the same desirable properties of crystal elimination and more uniform coverage of leaf surface with the formulation of the present invention.

## EXAMPLE 20

Field tests were conducted to evaluate the cosmetic appearance of a locus after application of various pesticide formulations. The locus was fertilized prior to treatment with 25-5-15 fertilizer at 4 lbs. per 1000 sq. ft. Total spray volume was 130 gallons/A. The application was made in early June; however, the turf was stressed from drought and was in a semi-dormant condition. This locus consisted of a mixture of common Kentucky bluegrass and perennial rye grass. Weed population consisted primarily of white clover, black medic and dandelion with an average weed cover of 57%.

The chlorflurenol methyl esters formulation of the present invention are designated as C-35 and C-39. In addition, a quantity of butyrlactone equal to that applied in the C-35 formulation when sprayed at 0.25 lbs./A active ingredient was mixed with commercial emulsifiable concentrate (EC) formulation of chlorflurenol methyl ester and with the dimethylamine salt solution of 2, 4-D + MCPP + dicamba to see whether the addition of this solvent increases the visible herbicide activity. Indulin Ag is a ligno sulfonic acid used as an ultraviolet light absorber since chlorflurenol is ultraviolet sensitive. The Poly fac PCW 218 is a surface active agent useful for preventing any initial precipitation of active ingredient of the formulation of the present invention when it is first added to water. The formulations of the present invention which were applied to the locus are as follows:

Chlorflurenol Methyl Ester Formulations

C-35

Chlorflurenol methyl ester technical 21.25% by weight
Butyrolactone 47.8125% by weight
Methyl pyrrolidone 15.9375% by weight
Indulin Ag 0.5% by weight
Poly fac PCW 218 14.5% by weight

C-39

Chlorflurenol methyl ester technical 16.875% by weight
Butyrolactone 37.969 by weight
Methyl pyrrolidone 12.656% by weight
Dipropylene glycol methyl ether 17.5% by weight
Indulin Ag 0.5 % by weight
Poly fac PCW 218 14.5 % by weight

The test results, as shown in Table 15, indicate the C-35 and C-39 formulations of the present invention provide a visible cosmetic response superior to the prior art emulsifiable concentrate formulation. Further, according to one surprising result, the addition of one of the polar/nonpolar, low vapor pressure solvents to a prior art CF emulsifiable concentrate formulation shows an increase in the visible activity of the active ingredient on the locus. The addition of one of these solvents is so effective when mixed with the dimethylamine salt solution of the standard treatment that the cosmetic rating applied to this plot was of little value. The cosmetic rating is based on visual impact of discoloration, twisting and curling of stems and leaves, or flower drop. In the application of the 2, 4-D + MCPP + dicamba as the active ingredient plus BLO as the polar/nonpolar solvent, weed kill had progressed to a point where the lack of weeds demonstrate the efficacy of the formulation. A check of this treatment shows a decline of 85% in weed cover compared to the untreated checks even though the climatic conditions had put the weeds into a state of near dormancy. These types of climatic conditions (high tempertures, low moisture) normally reduce the effectiveness of soluble salt formulations because the hydrophilic (polar) pathways of herbicide penetration are reduced.

EXAMPLE 21

A formulation of the present invention containing chlorflurenol methyl ester was evaluated for broadleaf weed control and cosmetic appearance of herbicidal activity. The site was heavy clay soil with thin turf and heavy weed infestation. The average of the three untreated checks showed 24% turf cover (primarily common Kentucky bluegrass, perennial rye grass with some tall fescue), 17.3% white clover, 56.7% dandelion and 2% miscellaneous weeds including broadleaf plantain, black medic, curly dock and yellow weed sorrel.

The site was fertilized prior to treatment at the rate of 3.5 lbs of 28-3-9 fertilizer per 1000 sq. ft. The formulation was diluted with water and applied with a hand sprayer to 100 sq. ft. plots at a spray volume of 130 or 75 gallons/A. The formulation of this invention used was designated as at "C-26":

Chlorfurenol Methyl Ester Formulation

C-26

Chlorflurenol methyl ester technical 21.25% by weight
Butyrolactone 47.8125% by weight
Methyl pyrrolidone 15.9375% by weight
Indulin Ag 0.5% by weight
Poly fac 709 14.5% by weight

The standard treatment of 2,4-D + MCPP + dicamba was given an arbitrary "7" on a 1 to 10 scale of cosmetic appearance of herbicide activity. Other treatments were rated against this comparative standard. Cosmetic appearance is important in commercial applications to turf since homeowners contracting the services of a professional lawn care operator have been conditioned to equate rapid discoloration and curling of plant tissue with effective weed control.

The weed control rating was determined by measuring the percent of weed cover in each plot compared to the untreated checks. The results are shown in Table 16. The chlorflurenol formulation of the present invention, unlike the commercial emulsifiable concentrate, did not suffer a reduction in cosmetic appearance of herbicidal activity with the increased spray volume. Further, the formulation of the present invention provides weed control comparable to the commercially acceptable treatment and the herbicidal activity of the C-26 formulation is equal to or better than the activity of the traditional EC which was applied at higher rates.

EXAMPLE 22

A field trial was conducted at West Lafayette, Indiana in mid September for broadleaf weed control in cool season turf. The weed population consisted of broadleaf plantain, dandelion, white clover and yellow wood sorrel. The formulations were applied with a back pack $CO_2$ sprayer at a spray volume of 175 gallon/A. Applications of all treatments were made on September 11, except for the formulation of this invention which was applied two days later. Treatments included:

#1 Standard prior art formulation: 2,4-D, MCPP, dicamba dimethylamine salt, at 0.605, 0.3225 & 0.08 lbs. acid equivalent/A, respectively.

#2 Standard prior art formulation: 2,4-D, 2,4-DP, and dicamba as the isooctyl ester, butoxy ethanol ester and acid forms, at 0.5, 0.5 & 0.125 lbs. acid equivalent/A, respectively

#3 Standard prior art formulation: a tank mix of chlorflurenol, triclorpyr and dicamba; chlorflurenol as the emulsifiable concentrate of the methyl ester, triclorpyr as the emulsifiable concentrate of the butoxy ethyl ester, and dicamba as the dimethylamine salt solution, at 0.25 + 0.125 + 0.125 lbs. acid equivalent/A, respectively.

#4 Test Material: chlorflurenol, triclopyr and dicamba; chlorflurenol as the C-117 formulation other ingredients identical to #3, as 0.125 + 0.125 + 0.125 lbs acid equivalent/A, respectively. The formulation of the C-117 is as follows:

Formulation C-117

Chlorflurenol methyl ester technical 16.2% by weight
Methyl pyrrolidone 15.8% by weight
Butyrolactone 47.5% by weight
Indulin Ag 0.5% by weight
Stepan PCW 218 20.0% by weight

The test results, as shown below, indicate that even when the formulation of the present invention is applied at a lower rate and two days later than the comparative standard prior art formulations, the mixture incorporating one active ingredient formulated according to this invention provides weed control and can be favorably compared to the standard prior art formulations.

## % WEED CONTROL AT:

| | 48 hrs. Post Treatment | 12 days | 14 days |
|---|---|---|---|
| #1 | 23 | | 77 |
| #2 | 27 | | 70 |
| #3 | 27 | | 77 |
| #4 | -0- (not applied) | 87 | |

EXAMPLE 23

A solution of 2,4-D acid using this invention was produced as follows:
% by weight:
25% 2,4-D acid
25% DMSO
50% Poly fac 218

Five ml of this formulation was added to 100 ml of distilled water with agitation to give a transparent solution/micro emulsion of pH 2.55. From previous work with this formulation, it had been determined that approximately 20-24 hours were required to reach the opalescent stage of colloidial dispersion under these conditions. Following formation of the opalescent state, 50 ml of a buffer solution of pH 10 containing potassium carbonate and potassium hydroxide was added with agitation. The opalescent sample reverted to a transparent liquid with 60 seconds of addition of the buffer solution and the pH was 6.65.

EXAMPLE 24

A solution containing 10 grams of ammonium sulfate in 40 grams of distilled water was prepared and gave a pH of 6.0. Five grams of this solution were added to 100 ml of distilled water with agitation. Five ml of the 2,4-D solution concentrate used in the previous experiment were added to the solution with agitation. The pH went to 2.75 and became opalescent in 2.5 minutes. The mixture was allowed to stir another 5 minutes before adding 30 ml of the pH 10 buffer to give 4.18 pH. This mixture became transparent in 2 minutes and reverted back to opalescent within 7 minutes.

The experiment was repeated substituting 50 ml of the pH 10 buffer to adjust the mixture to a pH of 6.65. This likewise cleared in 2 minutes and was still transparent after 60 minutes.

One ml of the 2,4-D formula was added with agitation to 100 ml of tap water heated to 130°F. The formula bloomed similar to a typical emulsifiable concentrate and produced a blue-white, opaque emulsion. The color and appearance suggested a fine micro emulsion to a coarse micro emulsion was formed.

The procedure above was repeated with tap water at 64°F which was then heated to 130°F on a hot plate with continuing agitation. The initial appearance of the 2,4-D formula was transparent and remained transparent even after heating and maintaining the mixture at 130°F.

EXAMPLE 25

Two flasks containing 100 ml of tap water cooled to 45°F were placed on stirplates and agitated at low speed. One ml of either TRE-9 or TRE-10 triclorpyr butoxyethyl ester formulation was added. The formulation TRE-10 formed an immediate precipitate and also produced a surface deposit of waxy material.

The formulation TRE-9 bloomed immediately under the same conditions producing a fine blue-white dispersion.

The experiment shows that the surface active agent alone is incapable of adequately dispersing the active ingredient especially at low water temperature even when in higher concentration than a formulation made by this invention.

Formulation TRE-9

Triclorpyr butoxy ethyl ester tech -62%
Poly fac PCW 218-28%
DMSO - 10%

Formulation TRE-10

Triclorpyr butoxy ethyl ester tech -62%
Poly fac PCW 218 -38%

In addition, each of the formulations of the present invention listed in Table 17 can also be prepared comprising at least one active ingredient together with the suitable carriers or stabilizers therefor, and at least one polar/nonpolar solvents.

In general, any conventional method of post-emergent application can be used for the formulations listed in the Examples and Tables contained in this specification. In accordance with the novel methods of this invention, undesirable pests are controlled by selectively contacting the foliage of the plant with the formulation of the present invention at a dosage rate sufficient to apply a pesticidally effective amount of the desired active ingredient. The formulations of the present invention, useful in the methods of this invention, should be selectively applied by direct spray or by other means capable of contacting only to the foliage and/or the immature stalks or tips of the emerging plants. Application rates of the formulations of the present invention will, of course, vary significantly on a per acre basis depending upon the number and type of pests which must be controlled. However, application rates will correspond to about 1/8 lbs/acre of active ingredient to 100 lbs/acre, generally the lower end of the range being about .25 lbs/acre.

Although the dosage rate of the formulations of the present invention required to accomplish the desired control will generally be within the ranges discussed above, the dosage rate best suited to accomplished the desired control of pests in any given case, can also be determined by field testing. Such tests may involve the application of a series of formulations having different concentrations of the active ingredient and polar/nonpolar solvents, and/or a series of tests in which the same formulation is applied to the pests in different plots of the same plant populations at different dosage rates, and observing the extent of pest control in each case. When effective concentrations and dosage rates are employed, significant results are evident within 24 to 48 hours and will provide an adequate indication of effectiveness. In most situations, prescreening tests are not required. Adequate control is clearly indicated by the disappearance or wilting and desication of the pests, without phototoxic injury to the crop or turf. It will be readily apparent to one skilled in the art that formulations exhibiting lower pesticidal activity will require a higher dosage than more potent active ingredients for the same degree of control.

The invention having been described in considerable detail, it should be understood that the above examples are for illustrative purposes only and are not intended to limit the scope of the invention in any way. Furthermore, it should be understood that minor modifications of the invention can be made without departing from the scope and spirit of the following claims.

## TABLE 1

Broadleaf Weed Control Study
Chlorflurenol EC – Indiana

| Rate | % Plantain Control | White Clover Control % |
|---|---|---|
| .5 lbs/A | 93 | 50 |
| 1 lb/A | 93 | 43 |
| 2 lb/A | 90 | 87 |

## TABLE 2

Broadleaf Weed Control Study – Indiana

| Product | Rate(s) Lbs. Acid Equivalent Per Acre | Average % Control |
|---|---|---|
| Standard Treatments (2,4-D + MCPP + dicamba) | .65 + .33 + .08 and 1.3 + .66 + .16 | 80 |
| Chlorflurenol EC | .5 | 60 |
| Chlorflurenol EC | 1 | 53 |
| Chlorflurenol EC | 2 | 83 |

Table 3.  BROADLEAF WEED CONTROL STUDY - INDIANA

| Herbicide Treatment | Rate(s) LB Acid Eq./A | Control Ratings @ | |
|---|---|---|---|
| | | 9 Days | 40 Days |
| | | % | |
| Standard Treatments | | | |
| 2,4-D/MCPP/dicamba DMA spray | 1.30 + 0.66 + 0.16 | 53 | 90 |
| 2,4-D/MCPP/dicamba DMA Granular | 1.17 + 0.53 + 0.125 | 23 | 87 |
| Chlorflurenol Emulsifiable Concentrate | 1.0 | 33 | 80 |
| Chlorflurenol Granular Weed/Feed [1] | 0.5 | 17 | 47 |
| Chlorflurenol Granular Weed/Feed [1] | 1.0 | 23 | 63 |
| Chlorflurenol Granular Weed/Feed [1] | 2.0 | 30 | 77 |
| Chlorflurenol plus Dicamba Granular Weed/Feed [1] | 1 + 0.1575 | 27 | 83 |

[1] Prepared using state-of-the-art coating process

Table 4. BROADLEAF WEED CONTROL STUDY - INDIANA

| Herbicide Treatment | Rate(s) LB Acid Eq./A | Control Ratings @ 22 Days |
|---|---|---|
| | | % |
| Standard Treatments | | |
| 2,4-D/MCPP/dicamba DMA spray | 1.30 + 0.66 + 0.16 | 93 |
| 2,4-D/MCPP/dicamba DMA Granular Weed & Feed | 1.17 + 0.53 + 0.125 | 77 |
| Chlorflurenol Emulsifiable Concentrate | 1.0 | 67 |
| Chlorflurenol Granular Weed & Feed[1] | 0.5 | 53 |
| Chlorflurenol Granular Weed & Feed[1] | 1.0 | 50 |
| Chlorflurenol Granular Weed & Feed[1] | 2.0 | 57 |
| Chlorflurenol plus Dicamba Granular Weed & Feed[1] | 1.0 + 0.1575 | 60 |

[1] Prepared using state-of-the-art coating process

Table 5. BROADLEAF WEED CONTROL STUDY - ILLINOIS

| Herbicide Treatments | Rate(s) LB Acid Eq./A | Average Weed Control @ 21 Days | | |
|---|---|---|---|---|
| | | White Clover | Dande- lion | Plantain |
| | | ——— % ——— | | |
| Standard Treatments | | | | |
| 2,4-D/MCPP/dicamba DMA spray | 1.30 + 0.66 + 0.16 | 72 | 72 | 80 |
| 2,4-D/MCPP/dicamba DMA Granular Weed/Feed | 1.17 + 0.53 + 0.125 | 57 | 67 | 60 |
| Chlorflurenol Emulsifiable Concentrate | 1.0 | 47 | 45 | 50 |
| Chlorflurenol Granular Weed/Feed [1] | 1.0 | 43 | 58 | 80 |
| Chlorflurenol Granular Weed/Feed [1] | 2.0 | 52 | 58 | 70 |
| Chlorflurenol plus Dicamba Granular Weed/Feed [1] | 1 + 0.1575 | 37 | 48 | 57 |
| Chlorflurenol plus Dicamba Granular Weed/Feed [1] | 2 + 0.1575 | 62 | 67 | 65 |

[1] Prepared using state-of-the- art coating process

Table 6.  BROADLEAF WEED CONTROL STUDY - TOLEDO, OHIO

| Active Ingredients | Solvent(s) | Rate(s) Lb Acid Eq./A | Additives | Dicamba/ CF Ratio | Weed Control @ 26 Days | Weed Control @ 66 Days |
|---|---|---|---|---|---|---|
| | | | | | — % — | |
| **Standard Treatments** | | | | | | |
| 2,4-D/MCPP | Water | 1.46 + 1.46 | None | – | 95 | 68.7 |
| 2,4-D/MCPP | Water | 1.17 + .53 + .125 | None | – | 95 | 70.7 |
| Chlorflurenol/dicamba | Blo | 1 +.0.1575 | None | 1:6.35 | 98 | 79.8 |
| Chlorflurenol/dicamba | Blo | 0.5 + 0.1575 | None | 1:3.17 | 96 | 71.7 |
| Chlorflurenol/dicamba | Blo | 0.25 + 0.1575 | None | 1:1.59 | 92 | 77.8 |
| Chlorflurenol/dicamba | Blo/ M-Pyrol | 1 + 0.1575 | None | 1:6.35 | 98 | 87.9 |
| Chlorflurenol/dicamba | Blo/ M-Pyrol | 0.5 + 0.1575 | None | 1:3.17 | 95 | 79.8 |
| Chlorflurenol/dicamba | Blo/ M-Pyrol | 0.25 + 0.1575 | None | 1:1.59 | 90 | 74.7 |
| Chlorflurenol/dicamba | Blo/ M-Pyrol | 0.5 + 0.1575 | Surfactants | 1:3.17 | 92 to 98[1] | 71.8 to 79.8[1] |

[1] Depending on surfactant used

Table 7. BROADLEAF WEED CONTROL STUDY - TOLEDO, OHIO

| Active Ingredients | Solvent | Lb | Rate(s) Acid Eq./A | Dicamba/ CF Ratio | Weed Control @ | |
|---|---|---|---|---|---|---|
| | | | | | 12 Days | 31 Days |
| | | | | | % | |
| **Standard Treatments** | | | | | | |
| 2,4-D/MCPP | Water | | 1.46 + 1.46 | - | 59.6 | 70.2 |
| 2,4-D/MCPP/dicamba | Water | | 1.17 + 0.53 + 0.125 | - | 53.2 | 67.0 |
| Chlorflurenol | Blo | | 0.5 | - | 68.1 | 76.6 |
| Chlorflurenol | Blo | | 0.33 | - | 72.3 | 86.2 |
| Chlorflurenol | Blo | | 0.25 | - | 72.3 | 68.1 |
| Chlorflurenol/Dicamba | Blo | | 0.5 + 0.1575 | 1:3.17 | 78.7 | 88.3 |
| Chlorflurenol/Dicamba | Blo | | 0.33 + 0.1575 | 1:2.1 | 85.1 | 85.1 |
| Chlorflurenol/Dicamba | Blo | | 0.25 + 0.1575 | 1:1.59 | 80.9 | 83.0 |
| Chlorflurenol/Dicamba | Blo | | 0.125 + 0.1575 | 1:0.79 | 70.2 | 66.0 |
| Chlorflurenol/Dicamba | Blo | | 0.33 + 0.127 | 1:2.6 | 70.2 | 52.1 |
| Chlorflurenol/Dicamba | Blo | | 0.33 + 0.1 | 1:3.3 | 63.8 | 69.1 |
| Chlorflurenol/Dicamba | Blo | | 0.33 + 0.082 | 1:4.02 | 74.6 | 73.4 |
| Chlorflurenol/Dicamba | Blo | | 0.25 + 0.127 | 1:1.97 | 63.8 | 76.6 |
| Chlorflurenol/Dicamba | Blo | | 0.25 + 0.1 | 1:2.5 | 63.8 | 71.3 |
| Chlorflurenol/Dicamba | Blo | | 0.25 + 0.082 | 1:3.05 | 51.1 | 31.9 |

Table 8. BROADLEAF WEED CONTROL STUDY - TOLEDO, OHIO

| Active Ingredients | Solvent | Rate(s) Lb Acid Eq./A | General Weed Control @ 21 Days |
|---|---|---|---|
| | | | — % — |
| **Standard Treatments** | | | |
| 2,4-D/MCPP #1 | Water | 1.5 + 1.5 | 90.8 |
| 2,4-D/MCPP #2 | Water | 1.5 + 1.5 | 74.1 |
| | | | |
| Chlorflurenol/Dicamba DMA | Blo | 0.25 + 0.1575 | 85.8 |
| Chlorflurenol/Dicamba DMA | Blo | 0.20 + 0.1575 | 79.9 |
| Chlorflurenol/Dicamba DMA | Blo | 0.15 + 0.1575 | 84.4 |
| | | | |
| Chlorflurenol/Dicamba | Blo/ M-Pyrol | 0.25 + 0.1575 | 79.7 |
| Chlorflurenol/Dicamba | Blo/ M-Pyrol | 0.20 + 0.1575 | 76.0 |
| Chlorflurenol/Dicamba | Blo/ M-Pyrol | 0.15 + 0.1575 | 77.9 |
| | | | |
| Chlorflurenol/Dicamba(Acid) | M-Pyrol | 0.25 + 0.1575 | 76.5 |
| Chlorflurenol/Dicamba(Acid) | M-Pyrol | 0.20 + 0.1575 | 76.7 |
| Chlorflurenol/Dicamba(Acid) | M-Pyrol | 0.15 + 0.1575 | 65.7 |
| | | | |
| Chlorflurenol/Dicamba DMA | M-Pyrol | 0.25 + 0.1575 | 77.7 |
| Chlorflurenol/Dicamba DMA | M-Pyrol | 0.20 + 0.1575 | 64.1 |
| Chlorflurenol/Dicamba DMA | M-Pyrol | 0.15 + 0.1575 | 67.0 |

Table 9. BROADLEAF WEED CONTROL STUDY – NEBRASKA

| | | Average of Control @ 20 and 27 Days | | |
|---|---|---|---|---|
| Herbicide Treatment | Rate(s) Lb Acid Eq./A | Buckhorn Plantain | Black Medic | White Clover |
| | | % | | |
| **Standard Treatments** | | | | |
| 2,4-D/MCPP DMA | 1.5 + 1.5 | 87.3 | 100. | 100. |
| 2,4-D/MCPP/dicamba DMA | 1.5 + 0.68 + 0.1575 | 91.8 | 100. | 95.3 |
| CF/D – PN | 0.25 + 0.1575 | 91.8 | 96.5 | 89.8 |
| CF/D – PN | 0.25 + 0.125 | 87.3 | 90.9 | 78.2 |
| CF/D – PN | 0.15 + 0.1575 | 71.3 | 54.2 | 56.4 |

No Herbicide injury (phytotoxicity) observed on tall fescue

Table 10.  BROADLEAF WEED CONTROL STUDY - IOWA

| Herbicide Treatment | Rate(s) Lb Acid Eq./A | Effect on Weeds [1] @ 7 Days | Dandelion Control @ 68 Days % |
|---|---|---|---|
| **Standard Treatments** | | | |
| 2,4-D/MCPP DMA | 1.5 + 1.5 | 3 | 73.3 |
| 2,4-D/MCPP/dicamba DMA | 1.51 + 0.68 + 0.157 | 4 | 90.0 |
| CF/D - PN | 0.25 + 0.1575 | 3 | 80.0 |
| CF/D - PN | 0.25 + 0.125 | 4 | 90.0 |
| CF/D - PN | 0.15 + 0.1575 | 3 | 76.7 |

[1]  Higher numbers denote greater response

Table 11. BROADLEAF WEED CONTROL STUDY II - IOWA

| Herbicide Treatment | Rate(s) Lb Acid Eq./A | Effect on Weeds @ | | Control @ 48 Days | | |
| --- | --- | --- | --- | --- | --- | --- |
| | | 1 Day | 2 Days | Dande-lion | Plan-tain | White Clover |
| | | | | % | | |
| **Standard Treatments** | | | | | | |
| 2,4-D/MCPP DMA Granular Weed/Feed | 1.5 + 1.5 | 2 | 2 | 74 | 0 | ND[1] |
| 2,4-D/MCPP DMA Water Spray | 1.5 + 1.5 | 2 | 5 | 100 | 100 | 100 |
| 2,4-D/MCPP/dicamba DMA Granular Weed/Feed | 1.51 + 0.68 + 0.1575 | 2 | 3 | 58 | ND[1] | 0 |
| 2,4-D/MCPP/dicamba DMA Water Spray | 1.51 + 0.8 + 0.156 | 3 | 5 | 100 | 100 | 100 |
| CF/D - PN Granular Weed/Feed | 0.25 + 0.1575 | 2 | 3 | 70 | 0 | 53 |
| CF/D - PN Granular Weed/Feed | 0.25 + 0.125 | 3 | 4 | 51 | ND[1] | 65 |
| CF/D - PN Granular Weed/Feed | 0.15 + 0.1575 | 2 | 3 | 56 | 33 | 0 |

[1] ND = No data due to lack of weeds in these plots

Table 12.   BROADLEAF WEED CONTROL STUDY I - VIRGINIA

| Herbicide Treatment | Rate(s) Lb Acid Eq./A | Control @ 34 Days | | | | | |
| | | Clover | Dandelion | Plantain | Yellow Wood Sorrel | Mouse-ear Chickweed | Common Chickweed |
|---|---|---|---|---|---|---|---|
| | | | | | % | | |
| Standard Treatments | | | | | | | |
| 2,4-D/MCPP/dicamba DMA | 1.51 + 0.68 + 0.157 | 70 | 30 | 50 | 60 | 40 | 7? |
| 2,4-D/MCPP/dicamba DMA | 0.3 + 1.37 + 0.11 | 60 | 40 | 50 | 50 | 30 | 6? |
| CF/D - PN | 0.25 + 0.1575 | 100 | 30 | 40 | 40 | 20 | 30 |
| CF/D - PN | 0.25 + 0.125 | 100 | 60 | 60 | 60 | 80 | 90 |
| CF/D - PN | 0.15 + 0.1575 | 100 | 30 | 50 | 90 | 80 | 70 |

Table 13. BROADLEAF WEED CONTROL STUDY II - VIRGINIA

| Herbicide Treatment | Rate(s) Lb Acid Eq./A | Turfgrass Cover 5/20 | Turfgrass Cover 6/17 | Control @ 28 Days Purslane Speedwell | Control @ 28 Days Yellow Wood Sorrel |
|---|---|---|---|---|---|
| | | | | % | |
| **Standard Treatments** | | | | | |
| 2,4-D/MCPP/dicamba DMA | 1.51 + 0.68 + 0.157 | 60 | 82 | 70 | 60 |
| 2,4-D/MCPP/dicamba DMA | 0.3 + 1.37 + 0.11 | 73 | 85 | 50 | 30 |
| CF/D - PN | 0.25 + 0.1575 | 83 | 98 | 60 | 40 |
| CF/D - PN | 0.25 + 0.125 | 63 | 88 | 80 | 80 |
| CF/D - PN | 0.15 + 0.1575 | 73 | 92 | 70 | 20 |

Table 14. BROADLEAF WEED CONTROL STUDY I - FLORIDA

| Herbicide Treatment | Rate(s) Lb Acid Eq./A | Average Phytotoxicity [1] (Damage) | | | |
| --- | --- | --- | --- | --- | --- |
| | | @ 14 Days | @ 21 Days by Cultivar | | |
| | | Centipede grass | Floratam | Raleigh | Floratine |
| | | % | | | |
| **Standard Treatments** | | | | | |
| 2,4-D/MCPP/dicamba DMA | 0.3 + 1.37 + 0.11 | 0.3 | 3.3 | 3.0 | 3.0 |
| CF/D - PN | 0.25 + 0.1575 | 0.6 | 0 | 0 | 0 |
| CF/D - PN | 0.25 + 0.125 | 0.3 | 0 | 0.3 | 0 |
| CF/D - PN | 0.15 + 0.1575 | 0.8 | 0 | 0 | 0.3 |

[1] Rating of 3 or higher unacceptable.

<center>TABLE 15</center>

| Treatment | Rate (lbs. acid equivalent/A) | Cosmetic Rating at 17 DAT |
|---|---|---|
| Standard 2,4-D + MCPP + dicamba DMA | 1.17 + 0.528 + 0.123 | 8 |
| 2,4-D + MCPP + dicamba DMA + BLO | 1.17 + 0.528 + 0.123 [+BLO] | 4[1] |
| Chlorflurenol methyl ester EC + dicamba DMA | 0.125 + 0.125 | 1.0 |
| Chlorflurenol methyl ester EC + dicamba DMA | 0.25 + 0.125 | 1.0 |
| Chlorflurenol methyl ester EC + dicamba DMA + BLO | 0.125 + 0.125 [+BLO] | 6.5 |
| Chlorflurenol methyl ester C-35 + triclorpyr butoxy ethyl ester EC | 0.1 + 0.1 | 5.0 |
| Chlorflurenol methyl ester C-35 + triclorpyr butoxy ethyl ester EC | 0.1875 + 0.125 | 8.75 |
| Chlorflurenol methyl ester C-35 + dicamba DMA | 0.25 + 0.125 | 6.5 |
| Chlorflurenol methyl ester C-39 + dicamba DMA | 0.125 + 0.125 | 6.0 |

[1] Cosmetic rating was low, not becuase of poor response, but rather because of rapid weed kill and a lack of weeds to view. Weed cover was 8 sq. ft. versus an average of 57% in the untreated checks.

## TABLE 16

| Treatment | Rate (lbs. acid Equivalent/A) | Spray Volume/A | Cosmetic Rating at 4 DAT | % Weed Control at 24 DAT |
|---|---|---|---|---|
| Standard 2,4-D + MCPP + dicamba) | 1 + 0.451 + 0.104 | 130 | 7 (Comparative Standard) | 79.3 |
| Chlorflurenol methyl ester EC + dicamba | 0.25 + 0.125 | 130 | 4.0 | 63.8 |
| Chlorflurenol methyl ester C-26 + dicamba | 0.25 + 0.125 | 130 | 7.5 | 77 |
| Chlorflurenol methyl ester C-26 + dicamba | 0.125 + 0.125 | 130 | 7.0 | 69.7 |
| Chlorflurenol methyl ester EC + dicamba | 0.25 + 0.125 | 75 | 7.0 | 82.2 |
| Chlorflurenol methyl ester C-26 + dicamba | 0.125 + 0.125 | 75 | 7.0 | 77.6 |

TABLE 17

(1)
77%      chlorpyrifos technical
10%      Stepan PCW 218
9.75%    butryolactone
3.25%    methyl pyrrolidone

(2)
77%      chlorpyrifos technical
10%      Stepan PCW 218
13%      DMSO

(3)
40%      chlorpyrifos technical
30%      Stepan PCW 218
30%      DMSO

(4)
30%      chlorpyrifos technical
49.5%    dipropylene glycol methyl ether
0.5      Indulin Ag
20.0     Stepan PCW 218

(5)
35%      chlorpyrifos technical
50%      butyrolactone
15%      Stepan PCW 218

(6)
33%      flurenol butylester technical
30.45%   butyrolactone
10.15%   methyl pyrrolidone
26.4%    Stepan PCW 218

(7)
16.2%    dicamba acid
47.85%   butyrolactone
15.95%   methyl pyrrolidone
20.0%    Stepan PCW 218

(8)
16.2%    MCPP acid
47.85%   butyrolactone
15.95%   methyl pyrrolidone
20.0%    Stepan PCW 218

(9)
16.2%    2,4-D acid
47.85%   butyrolactone
15.95%   methyl pyrrolidone
20.0%    Stepan PCW 218

44

TABLE 17 (con't)

(10)
24% chlorflurenol methyl ester technical
29% DMSO
29% dipropylene glycol methyl ether
19% Stepan PCW 218

(11)
16.2% chlorflurenol methyl ester technical
63.8% dipropylene glycol methyl ether
20.0% Stepan PCW 218

(12)
12.5% 2,4-D acid
6.2% MCPP acid
1.3% dicamba acid
20.0% dipropylene glycol methyl ether
20.0% DMSO
40.0% Stepan PCW 218

(13)
16.2% chlorfluenol methyl ester technical
1.7% 2,4-D acid
0.8% MCPP acid
0.2% dicamba acid
37.0% Stepan PCW 218
44.1% DMSO

(14)
67.0% triclorpyr butoxy ethyl ester technical
18.0% dipropylene glycol methyl ether
15.0% Stepan PCW 218

(15)
62.2% triclorpyr butoxy ethyl ester technical
17.8% DMSO
20.0% Stepan PCW 218

## Claims

1. A post-emergent, foliar applied pesticide formulation comprising (1) at least one post-emergent, foliar absorbed, substantially water insoluble active ingredient in association with at least one suitable carrier therefor, and optionally at least one suitable stabilizer therefor, (2) at least one substantially water miscible polar/nonpolar solvent having a vapor pressure of not more than 760 mm Hg at 20°C capable of dissolving components of a plant cuticle, including the cuticular wax, and, optionally (3) a surface active agent in an amount sufficient to substantially prevent said active ingredient from prematurely precipitating upon an initial dilution of said formulation with water; said formulation, upon dilution with water, forming a substantially colloidial suspension of fine crystals of active ingredient which can be readily resuspended in said dilution upon agitation of said dilution.

2. The formulation of claim 1, comprising approximately 10-85 wt. % polar/nonpolar solvents; 15-90 wt % active ingredient and suitable carrier, and, optionally at least suitable stabilizer therefor; and, optionally 10-40 wt. % surface active agent.

3. The formulation of claim 2, wherein said polar/nonpolar solvent is selected from the group comprising butyrolactone, dimethyl sulfoxide, propylene glycol, glycerine, dipropylene glycol methyl ether, methyl pyrrolidone or dimethyl foramide or suitable combinations thereof.

45

4. The formulation of claim 3, wherein said polar/nonpolar solvents are approximately, by weight percent, methyl pyrrolidone in 15.8 wt. %, and butyrolactone in 47.5 wt. %, said active ingredient comprises chlorflurenol methyl ester 16.2 wt. % and an ultraviolet stabilizer in 0.5 wt. % therefor, and said surface active agent is present in 20 wt. %.

5. The formulation of claim 3, wherein said polar/nonpolar solvents are approximately, by weight percent, methyl pyrrolidone, 12.6% wt. %, butyrolactone 38.0 wt. %, and dipropylene glycol methyl ether 17.5 wt. %, said active ingredient comprises chlorflurenol methyl ester 16.9 wt. % and an ultraviolet stabilizer in 0.5 wt. % therefor, and said surface active agent is present in 14.5 wt. %.

6. The formulation of claim 3, wherein said polar/nonpolar solvents are approximately, by weight percent, methyl pyrrolidone 15.9 wt. % and butyrolactone 47.8 wt. %, said active ingredient comprises chlorflurenol methyl ester 21.25 wt. % and an ultraviolet stabilizer 0.5 wt. % therefor, and said surface active agent is present in 14.5 wt. %.

7. The formulation of claim 3, wherein said polar/nonpolar solvent is dipropylene glycol methyl ether 50.0 wt. %, said active ingredient comprises chlorpyrifos 35 wt. %, and said surface active agent is present in 15.0 wt. %.

8. The formulation of claim 3, wherein said polar/nonpolar solvent is butyrolactone, and said active ingredient comprises chlorflurenol methyl ester and a light and coarse chaff corncob carrier therefor, said chlorflurenol methyl esther being dissolved in said butyrolactone at a ratio of approximately 7 parts carrier to 1 part chlorflurenol methyl ester/butyrolactone solution.

9. A method for the post-emergent control of a broad spectrum of pests which comprises applying to the locus where control is desired by post-emergent application a pesticidally effective amount of a formulation comprising (1) at least one post-emergent foliar absorbed substantially water insoluble active ingredient in association with at least one suitable carrier therefor, and optionally at least one suitable stabilizer therefor, (2) at least one substantially water miscible polar/nonpolar solvent having a vapor pressure of not more than 760 mm of Hg at 20°C capable of dissolving components of a plant cuticle, including the cuticular wax, and optionally (3) a surface active agent; said formulation being diluted with water such that said active ingredient is applied at an amount of at least .25 pounds per acre.

10. The method of claim 9, wherein said formulation comprises 10-85 wt. % polar/nonpolar solvent; 15-90 wt. % active ingredient and suitable carrier and optionally at least one suitable stabilizer therefor; and, optionally 10-40 wt. % surface active agent.

11. The formulation of claim 1, 2 or 3, wherein the active ingredient is chlorflurenol methyl ester.

12. The method of claim 9 or 10, wherein the active ingredient of the formulation is chlorfluorenol methyl ester.

FIG. 1

FIG. 2

FIG. 3

FIG. 4

FIG. 5

FIG. 6

FIG. 7

FIG. 8

FIG. 9

0 235 773

FIG. 10

FIG. 11

FIG. 12

FIG. 13

FIG. 14

FIG. 15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 279 331 (HOECHST) <br> * Page 1, lines 24-30; page 4, lines 6,25-27; claims 1,9 * | 1-12 | A 01 N 25/02 <br> A 01 N 25/14 <br> A 01 N 37/36 |
| | --- | | |
| X | EP-A-0 077 078 (NELSON RESEARCH) <br> * Claims 1-33 * | 1-12 | |
| | --- | | |
| X | EP-A-0 038 416 (INTERMEDICAT) <br> * Claims 1-7 * | 1-12 | |
| | --- | | |
| X | DE-A-2 351 363 (RENTOKIL) <br> * Claims; examples * | 1-12 | |
| | --- | | |
| X | CH-A- 452 991 (CROWN ZELLERBACH) <br> * Claims * | 1-12 | TECHNICAL FIELDS SEARCHED (Int. Cl.4) |
| | --- | | A 01 N |
| X | GB-A- 802 111 (I. LUBOWE) <br> * Page 1, line 69; claims 1-17 * | 1-12 | |
| | --- | | |
| X | US-A-4 415 355 (BASF) <br> * Claim 1 * | 1-12 | |
| | --- | | |
| X | US-A-3 756 801 (R. HERSCHLER) <br> * Claims * | 1-12 | |
| | ---     -/- | | |

The present search report has been drawn up for all claims

| Place of search | Date of completion of the search | Examiner |
|---|---|---|
| THE HAGUE | 12-06-1987 | NATUS |

# EUROPEAN SEARCH REPORT

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| X | US-A-2 558 762 (D. KOHR) <br> * Column 4, lines 55-66; column 5, lines 5-10 * | 1-12 | |
| X | AGRICULTURAL CHEMICALS, vol. 20, no. 4, April 1965, page 23: "DMSO shows great promise as carrier of agricultural toxicants" <br> * The whole article * | 1-12 | |
| X | W. HURTT: TECHNICAL MERMORANDUM 222, An evaluation of dimethyl sulfoxide as a possible adjuvant for several herbicides, January 1971, pages 1-12, Department of the Army, Maryland, US | 1-12 | |
| X | US-A-3 506 434 (E. JACOBI) <br> * Column 9, lines 48-51; example 7 * | 1-12 | TECHNICAL FIELDS SEARCHED (Int. Cl.4) |
| X | US-A-3 598 564 (E. JACOBI) <br> * Examples II,VII,XI * | 1-12 | |

The present search report has been drawn up for all claims

| Place of search | Date of completion of the search | Examiner |
|---|---|---|
| THE HAGUE | 12-06-1987 | NATUS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82